# EUROPÄISCHE PATENTSCHRIFT

(11) **EP 0 678 233 B1**
(45) Veröffentlichungstag und Bekanntmachung des Hinweises auf die Patenterteilung: **24.05.2000**
(21) Anmeldenummer: 95104599.6
(22) Anmeldetag: 29.03.1995
(51) Int. Cl.: A01C 7/12, A01C 7/08

(54) **Dosiervorrichtung für eine Verteilmaschine**
Apparatus for adjustment of the distribution rate
Appareil de dosage pour distributeur

(30) Priorität: 21.04.1994 DE 4413856; 04.05.1994 DE 4415603; 19.12.1994 DE 4445313; 22.06.1994 DE 4421842
(43) Veröffentlichungstag der Anmeldung: 25.10.1995
(60) Teilanmeldung: 99106896.6
(73) Patentinhaber: Amazonen-Werke H. Dreyer GmbH & Co. KG, 49205 Hasbergen (DE)
(72) Erfinder: Dreyer, Heinz, Dr., D-49205 Hasbergen (DE); Scheufler, Bernd, Dr. Ing., D-49205 Hasbergen (DE); Dreyer, Justus, D-49205 Hasbergen (DE)

(56) Entgegenhaltungen:
- EP-A- 0 209 063
- EP-A- 0 379 231
- AT-B- 387 129
- DE-A- 3 809 592
- FR-A- 1 563 965
- FR-A- 2 481 875

## Beschreibung

Die Erfindung betrifft eine Dosiervorrichtung für eine Verteilmaschine, wie Sämaschine und Düngerstreuer.

In der europäischen Patentschrift 03 58 878 wird eine Dosiervorrichtung für eine Verteilmaschine beschrieben. Diese Dosiervorrichtung ist für eine Verteilmaschine, wie Sämaschine oder Düngerstreuer vorgesehen. Diese Dosiervorrichtung ist unter den unteren Bereich eines Vorratsbehälters angeordnet. Die Dosiervorrichtung besteht jeweils aus einem Grob- oder Normaldosierrad und zwei Feindosierrädern, welche drehbar in einem Dosiergehäuse gelagert und mittels einer Dosierwelle antreibbar sind. Diese Dosierräder sind mittels Kupplungselementen wahlweise mit der Dosierwelle zu kuppeln. Die Kupplungselemente sind in Form eines Mehrkantprofiles ausgebildet, welche sich über einen vorgegebenen axialen Bereich der Dosierwelle erstrecken. Diese Kupplungselemente werden durch Verschieben der Dosierwellen in axialer Richtung relativ zu den Dosierrädern und dem Dosiergehäuse verschoben, so daß das Kupplungselement wahlweise mit den Dosierrädern im Eingriff bringbar ist. Diese Dosiervorrichtung weist ein einziges Grobdosierrad sowie auf beiden Seiten des Dosierrades angeordnete Feindosierräder auf. In der einen Stellung der Dosierwelle wird das eine Feindosierrad mit der Dosierwelle gekuppelt. Wenn die Dosierwelle weiter verschoben wird, wird das zweite Feindosierrad mit der Dosierwelle gekuppelt, so daß beide Feindosierräder Saatgut ausbringen. Wenn die Dosierwelle weiter verschoben wird, werden die beiden Feindosierräder von dem Antrieb von der Dosierwelle abgekuppelt und die Dosierwelle wird nur mit dem Grobdosierrad kraftschlüssig verbunden. Die beiden Feindosierräder sind bezogen auf ihre Zellen versetzt zueinander angeordnet, jedoch völlig gleich ausgebildet.

Von Nachteil ist bei dieser bekannten Dosiervorrichtung, daß die Dosierwelle verschiebbar gelagert ist, hierdurch ergibt sich eine aufwendige Anordnung der Dosierwelle und deren Antrieb durch das stufenlose Getriebe, denn die Dosierwelle muß gegenüber dem Getriebe in axialer Richtung verschiebbar angeordnet sein.

Weiterhin muß als nachteilig die feste und nicht entkuppelbare Verbindung zwischen den beiden das Grob- oder Normaldosierrad bildenden Dosierscheiben angesehen werden. Hierdurch ist ein großer Verstellbereich des Getriebes erforderlich.

Das Dosiervolumen der beiden Feindosierräder ist gleich groß.

Unterhalb der Dosierräder ist das durch eine Abwinklung der Bodenplatte gebildete Dichtelement angeordnet. Es hat sich gezeigt, daß bei stillgesetztem Grob- oder Normaldosierrad beispielsweise Rapskörner, die nur mit einem oder beiden Feindosierrädern ausgebracht werden, durch die Dosierzelle des Grob- oder Normaldosierrades über die obere Kante des Dichtelementes in unerwünschter Weise in die Förderleitung gelangen.

Durch die DE-OS 38 09 592 ist eine mechanische Drillmaschine mit einer Vielzahl auf einer Dosierwelle im Abstand zueinander in einzelnen Sägehäusen angeordneten Dosierrädern bekannt. Jedes Dosierrad dosiert das Material in zu Säscharen führenden Saatleitungsrohren. Das als Nasensärad bezeichnete Normalsärad ist mittels eines Verbindungsmittels mit dem Feinsärad antriebsverbindbar. Das Feinsärad ist drehfest auf der Säwelle gelagert. Das Feinsärad ist nicht von der Säwelle abzukuppeln, sondern wird auch dann rotierend angetrieben, wenn das Saatgut über das Nasensärad ausgebracht wird. Das Feinsärad treibt dann in diesem Falle das Normalsärad über einen Kupplungsstift an. Das für das Anlegen der Fahrgassen abschaltbare Särad ist im Gegensatz zu den übrigen Särädern auf einer Hohlwelle auf der Säwelle angeordnet. Diese Hohlwelle ist über eine Kupplungseinrichtung mit der Säwelle zu kuppeln bzw. abzukuppeln. Wenn Fahrgassen angelegt werden sollen, d.h. wenn Markierungsstreifen auf dem bestellten Acker entstehen sollen, in denen kein Saatgut ausgebracht wird, wird über eine Kupplung die Antriebsverbindung zwischen der Hohlwelle und der Säwelle gelöst, so daß diese Säräder stillstehen. Wenn jedoch keine Fahrgassen angelegt werden sollen, wird die Hohlwelle über die Kupplung mit der Säwelle drehfest verbunden, so daß auch diese Säräder Saatgut ausbringen.

Die FR-A-15 63 965 zeigt eine mechanische Drillmaschine. Die Dosierorgane sind hier ebenfalls als Normal- und Feinsäräder ausgebildet. Jedes Dosierorgan dosiert das Material in zu Säscharen führenden Saatleitungsrohren. Vom Aufbau her entspricht das aus einem Normal- und Feinsärad bestehende Dosierrad dem Aufbau der vorbeschriebenen DE-OS 38 09 592.

Der Erfindung liegt die Aufgabe zugrunde, eine verbesserte Dosiervorrichtung zu schaffen.

Diese Aufgabe wird durch die kennzeichnenden Merkmale des Anspruches 1 gelöst.

Hierdurch wird u.a. eine einfache Lagerung der Dosierwelle und eine einfache wahlweisen Zu- und Abschaltung der Grob- oder Dosierräder und dem Feindosierrad erreicht. Es kann eine axial festliegende Dosierwelle verwendet werden und die Kupplungselemente sind im frei zugänglichen Bereich außerhalb der Dosierräder und des Dosiergehäuses angeordnet, so daß eine einfache Betätigung der Kupplungselemente und eine einfache Überprüfung der Einkupplung bzw. Auskupplung der Dosierräder vorgenommen werden kann.

Eine einfache Anordnung wird dadurch erreicht, daß die Dosierräder auf auf der Dosierwelle angeordneten Hohlwellen angeordnet sind. Um eine ausreichende Abschaltmöglichkeit in einfacher Weise der Dosierräder zu erhalten, ist vorgesehen, daß zumindest auf einer der Hohlwellen zumindest eine weitere zumindest ein Dosierrad antreibende Hohlwelle angeordnet ist.

Eine ausreichende und einfache stufenweise Ab- bzw. Zuschaltung der Dosierräder wird dadurch erreicht, daß jeweils zumindest ein Dosierrad mit einer Hohlwelle drehfest verbunden ist, und daß die Hohlwellen jeweils mittels zumindest eines Kupplungselementes mit der Dosierwelle kuppelbar sind.

Damit die Dosierräder in ihrem abgekuppelten Zustand definiert festgelegt sind, damit nicht durch irgendwelche Schwergängigkeiten etc die an sich stillgesetzten Dosierräder nicht in unerwünschter Weise Material ausbringen, ist vorgesehen, daß die Kupplungselemente jeweils derart ausgelegt sind, daß in der einen Stellung das Kupplungselement das Dosierrad mit der Dosierwelle kuppelt und in der anderen Stellung das Kupplungselement das Dosierrad gegenüber dem Gehäuse im entkuppelten Zustand stillsetzt.

Eine einfache Herstellung der Dosierräder wird dadurch erreicht, daß jedes Dosierrad aus zumindest zwei aneinander anliegenden Dosierscheiben besteht, die drehfest miteinander zu einem Dosierrad verbunden sind. Hierdurch wird auch die Möglichkeit geschaffen, daß die Zellen eines Dosierrades um das Maß, welches aus dem Produkt Zellenbogenlänge geteilt durch Anzahl der Dosierscheiben gebildet wird, versetzt sind. Infolge dieser Maßnahme ergibt eine sehr kontinuierliche und gleichmäßige Förderung des Materials aus dem Vorratsbehälter über die Dosierräder in die Förderleitung.

Es hat sich als vorteilhaft erwiesen, insbesondere wenn sehr kleine Mengen Saatgut ausgebracht werden müssen, daß das eine der beiden Feindosierräder ein größeres Dosiervolumen als das andere Feindosierrad aufweist. Hierdurch kann in dem ersten kleinen Mengenbereich, nur das ein geringeres Dosiervolumen aufweisende Feindosierrad mit der Antriebswelle gekuppelt werden, so daß nur dieses Feindosierrad in sehr exakter Weise das Material dosiert. Dieses das kleinere Dosiervolumen aufweisende Feindosierrad ist also als "Feinstdosierrad" ausgebildet. Hierzu ist es erforderlich, daß das innenliegende Feindosierrad dann das kleinere Fördervolumen aufweist.

Um eine gute Abstufung der Fördermengen auf sehr einfache Weise und eine genaue Einstellung der Fördermenge zu erreichen, ist vorgesehen, daß wahlweise nur ein oder beide Grob- oder Normaldosierräder mit der Dosierwelle kuppelbar sind.

Um die Dosiervorrichtungen in einfacher Weise an die verschiedenen auszubringenden Materialeigenschaften anpassen zu können, ist vorgesehen, daß die einzelnen Dosierräder leicht gegen eine andere Form oder ein anderes Fördervolumen aufweisende Dosierräder austauschbar sind.

Desweiteren ist vorgesehen, daß das eine der beiden Grob- oder Normaldosierräder ein größeres Dosiervolumen als das andere Grob- oder Normaldosierrad aufweist. Hierdurch kann zum Beispiel mit dem das größere Dosiervolumen aufweisende Grob- oder Normaldosierrad in vorteilhafter Weise Mais, Bohnen, Erbsen etc. ausgebracht werden. Hierbei ist vorgesehen, daß zwei Grob- oder Normaldosierräder vorgesehen sind und zwar derart, daß wahlweise ein oder beide Grob- oder Normaldosierräder mit der Dosierwelle kuppelbar sind.

Das unterschiedliche Dosiervolumen der Grob- oder Normaldosierräder bzw. Feindosierräder läßt sich dadurch erreichen, daß unterschiedlich breite Dosierräder oder unterschiedlich tiefe Dosierzellen vorgesehen sind.

Der einfache Austausch der Dosierräder läßt sich dadurch erreichen, daß zumindest eine der Seitenwände des Dosiergehäuses mit dem Kupplungselement abnehmbar an dem Dosiergehäuse angeordnet ist.

Desweiteren ist vorgesehen, daß die Dosiervorrichtung eine Rührwelle oberhalb der Dosierräder aufweist, daß die Rührwelle über einen Stirnradtrieb von der Dosierwelle antreibbar ist. Dieser einfache Antrieb ist insbesondere auch durch die axial festliegende Dosierwelle in einfachster Weise zu erreichen. Damit ergibt sich ein sehr einfacher Antrieb der Dosiereinheit und auch der Rührwelle selbst. Die Rührwelle bzw. die Dosierwelle kann je nach Einbauverhältnissen von der einen oder anderen Seite der Dosiervorrichtung mit einem Antrieb, ausgehend von einem stufenlosen Getriebe, welches vor einer Kraftquelle, beispielsweise einem auf einem Boden abrollenden Antriebsrad angetrieben wird, gekuppelt werden.

Desweiteren ist nach der Erfindung vorgesehen, daß die Dosierräder an ihrer Außenfläche jeweils sich axial erstreckende Zellen aufweisen, und im unteren Bereich der Dosierräder zumindest ein das Gehäuse gegen die Dosierräder abdichtendes Dichtelement angeordnet ist, wobei das Dichtelement in Förderrichtung gesehen eine Länge aufweist, die zumindest dem Bogenmaß der Zellen an deren äußeren Rand entspricht. Infolge dieser Maßnahme wird sicher verhindert, daß bei dem stillgesetzten Dosierrad Saatgut durch die Zelle über das Dichtelement nach außen gelangen kann. Somit werden also sicher Fehldosierungen vermieden.

In einer Ausführung ist vorgesehen, damit bei stillgesetzten Dosierräder kein Saatgut durch die Zelle über das Dichtelement nach außen gelangen kann, daß ein zwischen den Zellen des Dosierrades sich befindlicher Zellensteg abdichtend mit der Dichtlippe zusammenwirkt. Vorteilhaft ist hierbei, wenn der Zellensteg zumindest teilweise mit der Dichtlippe überlappt. Hierzu kann vorgesehen sein, daß der Zellensteg zumindest teilweise überdeckend zu der Dichtlippe steht. Bei Dosiervorrichtungen, die mehrere abschaltbare Dosierräder aufweisen, ist vorgesehen, daß die Stege in der abgeschalteten und festgesetzten Position der Dosierräder zumindest annähernd zueinander fluchtend festsetzbar sind.

Um eine gleichförmige Dosierung der Feindosierräder zu erreichen ist vorgesehen, daß die Grob- oder Normaldosierräder eine größere Teilung als die Feindosierräder aufweisen, so daß mehr Dosierzellen bei dem Feindosierrad als bei dem Grob- oder Normaldosierrad vorhanden sind.

Eine vorteilhafte Abdichtung läßt sich dadurch erreichen, daß das Dichtelement im Bereich der Grob- oder Normaldosierräder eine größere Breite als im Bereich der Feindosierräder aufweist.

Das gleiche bzgl. der Vermeidung von Fehldosierungen durch unerwünschtes Austreten von Saatgut durch die Dosierzellen von stillgesetzten Dosierrädern ist dadurch zu erreichen, daß die Dosierräder durch Anschlagelemente in definierte Stellungen festgesetzt werden und zwar derart, daß die die Dosierzellen voneinander trennenden Stege direkt auf oder in unmittelbarer Nähe des Dichtelementes festgesetzt oder gehalten werden, so daß kein Material durch die Dosierzellen austreten kann.

Es hat sich bei Versuchen gezeigt, daß die Herstellung des Dichtelementes aus Polyurethan vorteilhaft ist, weil das Dichtelement dann immer nach Verformung das Bestreben hat in seine Ursprungslage zurückzukehren.

Um in einfacher Weise den Vorratsbehälter von Restmengen entleeren zu können, ist vorgesehen, daß unterhalb der Dosierräder in dem Dosiergehäuse eine Entleerungsklappe oder -schieber angeordnet ist.

Desweiteren ist vorgesehen, daß bei Maschinen mit kleineren Arbeitsbreiten die Dosiervorrichtung im unteren Bereich eines Vorratsbehälters, der einen Auslauftrichter aufweist, angeordnet ist, und daß bei größeren Arbeitsbreiten der Vorratsbehälter zumindest zwei Auslauftrichter mit zwei Dosiervorrichtungen aufweist.

Um in einfacher Weise eine Ausbringmengenveränderung vornehmen zu können, falls dies die Bodenbedingungen erfordern, ist vorgesehen, daß an der Dosiervorrichtung eine Fernbedienungsvorrichtung angeordnet ist, mittels welcher die Ausbringmenge einstellbar und /oder veränderbar ist.

Um bei dem Anlegen von Fahrgassen die Saatgutmenge pro Säschar konstant halten zu können, ist vorgesehen, daß bei einer Sämaschine, die eine Fahrgassenschaltung aufweist, die Dosiervorrichtung derart verstellt wird, daß bei dem Anlegen der Fahrgasse die Saatgutmenge um die sich an den Fahrgassensäscharen zugeführte Saatgutmenge reduziert wird.

Hinsichtlich der Anordnung der Kupplungselemente hat sich als vorteilhaft herausgestellt, daß die Feindosierräder auf der einen Seite und die Grob- oder Normaldosierräder auf der anderen Seite der Dosiervorrichtung angeordnet sind.

Damit sich kein Saatgut zwischen den einzelnen Zellen der Dosierräder verklemmen kann, während einige der Dosierräder stillgesetzt sind, sind zwischen den getrennt zu- und abschaltbaren Dosierrädern jeweils Scheiben oder scheibenartige Elemente angeordnet, welche die Zellen der einzelnen Dosierräder voneinander trennen.

Weitere Einzelheiten der Erfindung sind den übrigen Unteransprüchen, der Beispielsbeschreibung und den Zeichnungen zu entnehmen. Hierbei zeigen
- Fig. 1: die pneumatische Drillmaschine in Seitenansicht und in Prinzipdarstellung,
- Fig. 2: die Drillmaschine in der Ansicht von hinten und in Prinzipdarstellung,
- Fig. 3: eine weitere Drillmaschine in der Ansicht von hinten und in Prinzipdarstellung,
- Fig. 4: eine weitere Drillmaschine in der Ansicht von hinten und in Prinzipdarstellung,
- Fig. 5: eine weitere Verteilmaschine in der Ansicht von hinten und in Prinzipdarstellung,
- Fig. 6: die Dosiervorrichtung der Verteilmaschine im Schnitt und in Prinzipdarstellung,
- Fig. 7: die Dosiervorrichtung in der Ansicht VII - VII,
- Fig 8: eine weitere Dosiervorrichtung im Schnitt und in Prinzipdarstellung,
- Fig. 9: die Dosiervorrichtung gemäß Fig. 8 in der Ansicht IX - IX,
- Fig. 10: eine weitere Dosiervorrichtung nach Fig. 8 in der Ansicht IX - IX,
- Fig. 11: eine weitere Dosiervorrichtung nach Fig. 8 in der Ansicht XI - XI,
- Fig. 12: der Antrieb der Dosierwelle und der Rührwellen der Dosiervorrichtung gemäß Fig. 8 in Prinzipdarstellung,
- Fig. 13: die Darstellung eines weiteren Antriebes der Dosierwelle und der Rührwelle der Dosiervorrichtung und
- Fig. 14: eine weitere Variante des Antriebes der Dosierwelle und der Rührwelle der Dosiervorrichtung in Prinzipdarstellung.

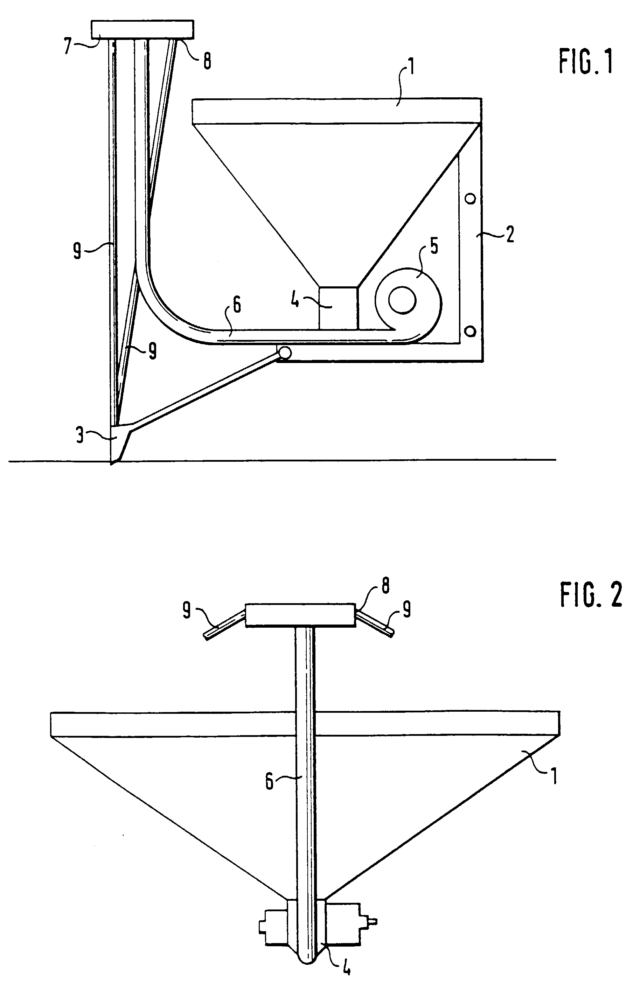

Die pneumatische Verteilmaschine gemäß Fig. 1 und 2 weist den Vorratsbehälter 1, den Rahmen 2 und die an dem Rahmen 2 angelenkten Säschare 3 auf. Das sich im Vorratsbehälter befindliche Material wird über die Dosiervorrichtung 4 über eine Schleuse in die an das Gebläse 5 angeschlossene Förderleitung 6 eingespeist. Über die Förderleitung 6 gelangt das dosierte Material zu dem als Prallkopf 7 ausgebildeten Verteiler, von dem aus das Saatgut auf die einzelnen Auslässe 8, an denen die zu den Säscharen 3 führenden Leitungen 9 angeschlossen sind, aufgeteilt wird.

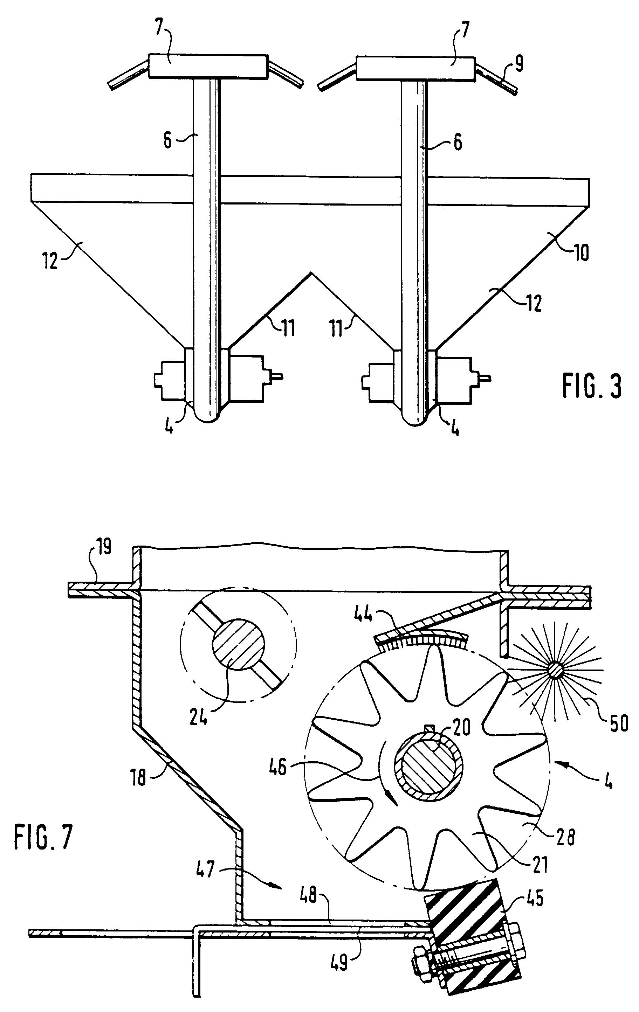

Beim Ausführungsbeispiel gemäß Fig. 3 ist der Vorratsbehälter 10 der Verteilmaschine durch das dachförmige Mittelteil 11 in die beiden Auslauftrichter 12 aufgeteilt. Unterhalb jedes Auslauftrichters 12 ist die Dosiervorrichtung 4 mit der Förderleitung 6, die ebenfalls an ein Gebläse 5 angeschlossen ist, angeordnet. Jede Förderleitung 6 führt zu einem Verteiler 7.

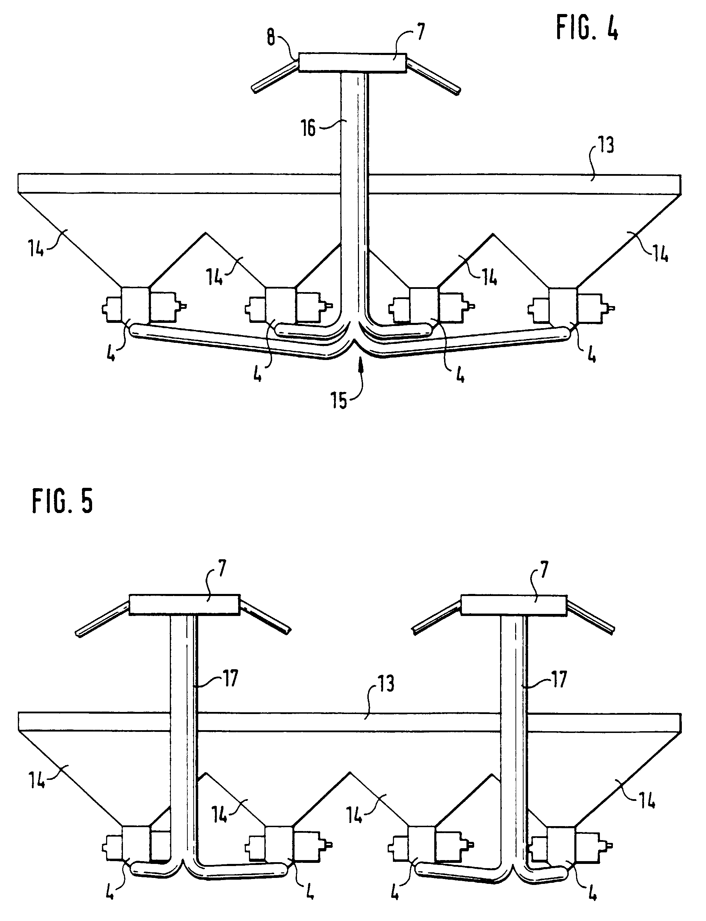

Bei der Verteilmaschine gemäß Fig. 4 weist der Vorratsbehälter 13 vier Auslaßtrichter 14 mit jeweils einer Dosiervorrichtung 4 auf. Sämtliche Förderleitungen 6 münden in ein Anschlußstück 15, welches die Förderleitungen 6 zuammenfaßt und zu einem Steigrohr 16 führt. Das von sämtlichen Dosiervorrichtungen 4 dosierte Material gelangt zu dem Verteilerkopf 7, wo es dann auf die einzelnen Ausläufe 8 verteilt wird. Durch diese Ausbildung des Vorratsbehälters 13 mit vier Auslauftrichtern 14 baut der Vorratsbehälter 13 auch mit einem großen Fassungsvermögen relativ niedrig. Der Vorratsbehälter 13 weist in seinem oberen Bereich eine Breite von etwa 3 m auf, so daß er noch auf öffentlichen Straßen und Wegen transportiert werden kann.

Die Verteilmaschine gemäß Fig. 5 weist den Vorratsbehälter 13 mit den vier Auslaßtrichtern 14 auf. Unter jedem Auslaßtrichter 14 ist eine Dosiervorrichtung 4 angeordnet. Jeweils zwei Dosiervorrichtungen 4 ist eine zentrale Förderleitung 17 mit einem Verteilerkopf 7 zugeordnet.

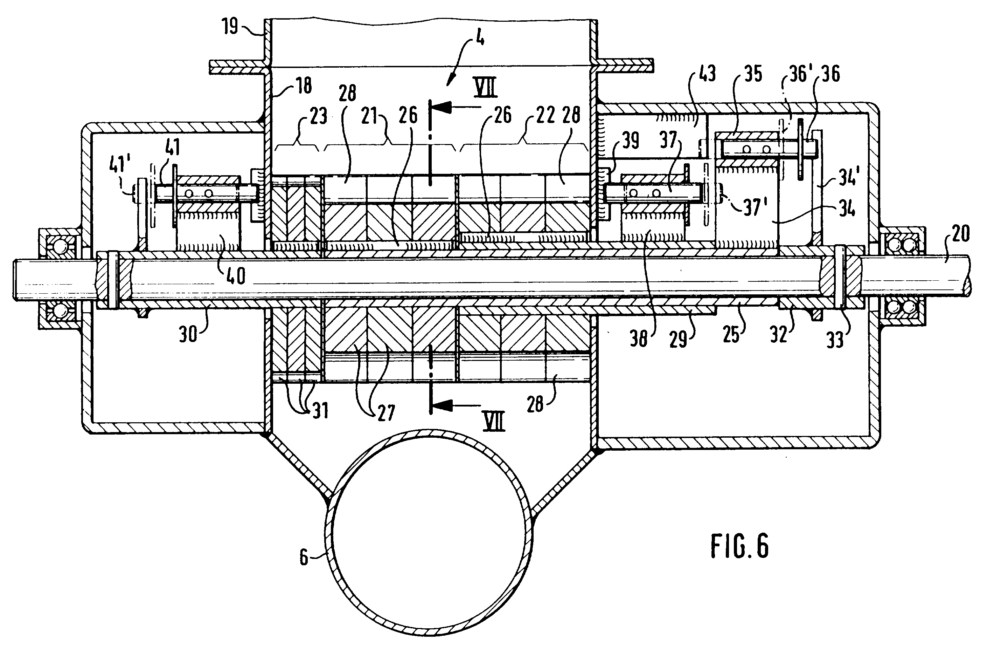

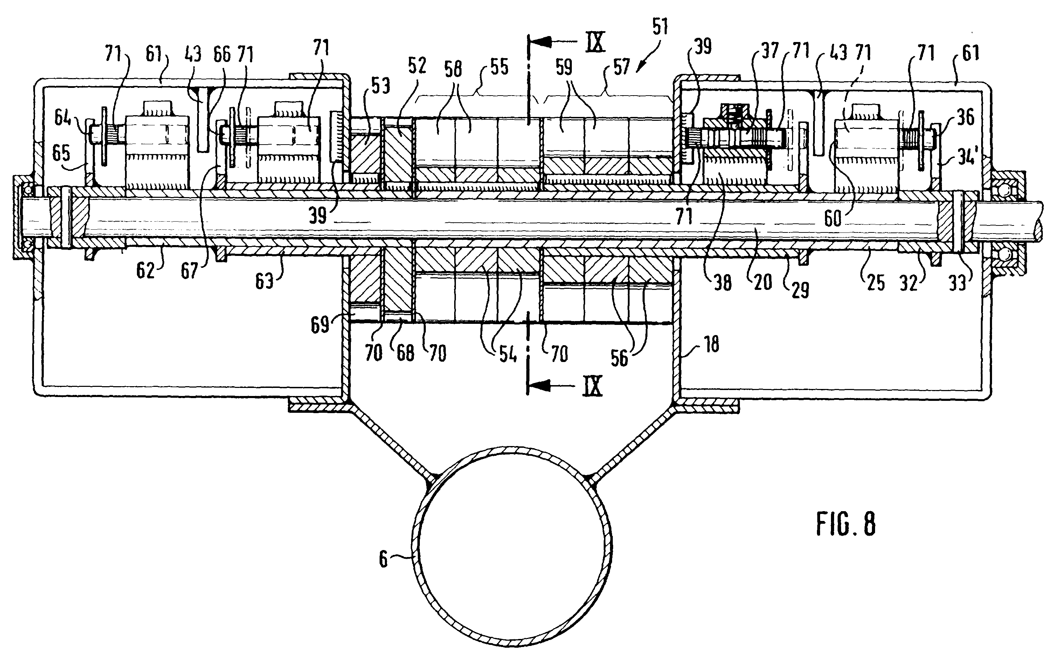

Die Fig. 6 zeigt die Dosiervorrichtung 4, die unterhalb der Vorratsbehälter 1, 10, 13 angeordnet wird. Die Dosiervorrichtung 4 gemäß den Fig. 6 und 7 ist für eine Sämaschine oder einen Düngerstreuer vorgesehen. Jede Dosiervorrichtung 4 weist ein Dosiergehäuse 18 auf. Das Dosiergehäuse 18 ist an den Anschlußflanschen 19 des Vorratsbehälters 1 befestigt. In dem Dosiergehäuse 18 ist die Dosierwelle 20 gelagert. Auf der Dosierwelle 20 sind die beiden Grob- oder Normaldosierräder 21 und 22 und ein Feindosierrad 23 in dem Gehäuse 18 angeordnet. Oberhalb der Dosierräder 21, 22 und 23 ist in dem Dosiergehäuse 18 die angetriebene Rührwelle 24 mit Rührelementen angeordnet.

Auf der Dosierwelle 20 ist die aus dem Gehäuse 18 herausgeführte Hohlwelle 25, auf der das Grob- oder Normaldosierrad 21 sich befindet, angeordnet. Mit dieser Hohlwelle 25 ist das Grob- oder Normaldosierrad 21 über die Keilverbindung 26 ausgebildete drehfeste Verbindung drehfest angeordnet. Das Grob- oder Normaldosierrad besteht aus drei Dosierscheiben 27, die Dosierscheiben 27 weisen Dosierzellen 28 auf. Die Zellen 28 der Dosierscheiben 27 eines Dosierrades 21 sind um das Maß, welches aus dem Produkt Zellenbogenlänge geteilt durch die Anzahl der Dosierscheiben 21 gebildet wird, zueinander versetzt, so daß eine kontinuierliche und gleichmäßige Förderung erreicht wird.

Auf der Hohlwelle 25 ist eine weitere aus dem Gehäuse 18 herausgeführte Hohlwelle 29 angeordnet, auf die das Grob- oder Normaldosierrad 22 mittels der als Keilverbindung 26 ausgebildeten Verbindung drehfest angeordnet sind. Desweiteren ist auf der Dosierwelle 20 die Hohlwelle 30 angeordnet, auf der mittels der Keilverbindung 26 die Dosierscheiben 31 des Feindosierrades 23 angeordnet sind.

Auf der Dosierwelle 20 ist außerhalb des Gehäuses 18 eine Buchse 32 mit dem Verbindungsstift 33 drehfest angeordnet. An der Hohlwelle 25 ist außerhalb des Gehäuses 18 der Mitnehmerhebel 34 angebracht, der an seinem äußeren Ende 35 den verschiebbaren Kupplungsstift 36 trägt. Wenn der Kupplungsstift 36 in der mit durchzogenen Linien dargestellten Position sich befindet, wird die Hohlwelle 25 und somit das Dosierrad 21 über den Mitnehmerhebel 34' und den Kupplungsstift 36 mitgenommen, so daß über die Dosierwelle 20, die über ein einstellbares und nicht näher dargestelltes Regelgetriebe von einer Kraftquelle, beispielsweise einem auf dem Boden abrollenden Antriebsrad angetrieben wird, das Dosierrad 21 angetrieben wird, so daß über das Grob- und Normaldosierrad 21 das sich im Vorratsbehälter 1 befindliche Material in die Förderleitung 6 über eine Schleuse eingeleitet wird. Mittels des Grob- und Dosierrades 21 werden mittlere Mengen Saatgut ausgebracht. Wenn nun größere Mengen, die über das Regelgetriebe nicht einstellbar sind, ausgebracht werden sollen, wird der der Hohlwelle 29 und dem Normal- und Grobdosierrad 22 zugeordnete Kupplungsstift 37 aus der mit durchzogenen in die mit strichpunktierte Linie dargestellte Position 37' gebracht, so daß über den Kupplungsbolzen 37 durch den Hebel 38, der über den Bolzen 37' und dem Mitnehmerhebel 34 mitgenommen wird, auch das Grob- oder Normaldosierrad 22 angetrieben wird, so daß über das Grob- oder Normaldosierrad 22 gleichzeitig mit dem Normal- oder Grobdosierrad 21 das sich im Vorratsbehälter 1 befindliche Material in die Förderleitung 6 eingebracht wird.

Wenn der Kupplungsbolzen 37 sich in der mit durchzogenen Linien dargestellten Position befindet, faßt der Kupplungsbolzen 37 hinter den Anschlag 39, so daß sichergestellt ist, daß das Normal- und Grobdosierrad 22 sich nicht dreht, sondern sicher stillgesetzt ist, damit es zu keiner Fehldosierung kommt. Das gleiche trifft für den an dem Mitnahmeelement 40 der Hohlwelle 30, die dem Feindosierrad 23 zugeordnet ist, zugeordneten Bolzen 41 zu, der ebenfalls hinter den Anschlag 42 faßt, so daß auch das Feindosierrad 23 sicher stillgesetzt ist und sich keinesfalls versehentlich mitdrehen kann.

Die Länge der Bolzen 36, 37 und 41 ist so gewählt, daß keinesfalls in einer Zwischenstellung der Bolzen 36, 37 und 41 gleichzeitig hinter dem Anschlagelement 39, 41 und dem Mitnahmeelement 33, 34, 40 faßt, damit jede Bruchgefahr ausgeschlossen ist.

Die als Kupplungselemente ausgebildeten Bolzen 36, 37 und 41 sind außerhalb der Dosierräder und des Gehäuses in einem gut einsehbaren und zugänglichen Bereich angeordnet, so daß die Bolzen leicht geschaltet bzw. betätigt werden können.

Wenn mit der Dosiervorrichtung 4 gemäß Fig. 6 und 7 mit dem Feindosierrad 23 Feinsämereien dosiert werden sollen, wird der Bolzen 36 in die mit gestrichelten Linien dargestellte Position 36' geschoben, damit der Antrieb entkuppelt ist. Wenn der Bolzen 36 sich in der gestrichelten Position 36' befindet, so sind gleichzeitig die beiden Normal- und Grobdosierräder 21, 22 von dem Antrieb durch die Dosierwelle 20 abgekuppelt. In der Position 36' faßt der Bolzen 36 hinter den Anschlag 43 und so wird eine unerwünschte Drehung der Normal- oder Grobdosierräder 21 und 22 sicher vermieden. Dann wird der Bolzen 41 in die mit gestrichelten Linien dargestellte Position 41' geschoben, damit der Antrieb zwischen der Dosierwelle 20 und dem Feindosierrad 23 hergestellt ist, so daß jetzt die Feindosierräder 23 das sich im Vorratsbehälter 1 befindliche Material in die Förderleitung 6 dosieren.

Oberhalb der Dosierräder 21, 22 und 23 ist an dem Dosiergehäuse 18 ein das Dosiergehäuse 18 gegen die Dosierräder 21, 22 und 23 abdichtendes Element 44, daß als Borstenelement ausgebildet ist, angeordnet.

Unterhalb der Dosierräder 21, 22 und 23 befindet sich an dem Dosiergehäuse 18 ein das Dosiergehäuse 18 gegen die Dosierräder 21, 22 und 23 abdichtendes Dichtelement 45. Dieses Dichtelement 45 weist in Förderrichtung 46 gesehen eine Länge auf, die zumindest dem Bogenmaß der Zelle 28 an deren äußerem Rand entspricht. Das Dichtelement besteht aus einem elastischen Gummi- oder Kunststoffmaterial, wie beispielsweise Moosgummi.

Im unteren Bereich 47 des Dosiergehäuses 18 befindet sich die Restentleerungsöffnung 48, die durch einen Schieber 49 zu öffnen bzw. ein der eingezeichneten Position durch den Schieber 49 verschlossen ist.

Oberhalb der Feindosierräder 23 kann außerhalb des Dosiergehäuses 18 ein Reinigungselement 50, wie beispielsweise Krallen, Reinigungsbürste, Reinigungswolle, Kratzerelementen etc. angeordnet sein, um die Zellen 28 von an oder in den Zellen anhaftenden Materialien zu reinigen.

Die Dosiervorrichtung 51 gemäß Fig. 8 entspricht in ihrem Aufbau im Prinzip der Dosiervorrichtung 4 gemäß Fig. 8, jedoch mit dem Unterschied, daß zwei Feindosierräder 52 und 53 vorgesehen sind und daß die Kupplungselemente zwischen der Dosierwelle 20 und den Hohlwellen anders konstruktiv ausgestaltet sind. Auch diese Kupplungselemente sind außerhalb der Dosierräder und des Dosiergehäuses angeordnet.

Auf der Dosierwelle 20 ist die Hohlwelle 25 angeordnet. Auf der Hohlwelle 25 befinden sich die Dosierscheiben 54 des Normal- oder Grobdosierrades 55 in drehfester Anordnung. Auf der Hohlwelle 25 ist die weitere aus dem Dosiergehäuse 18 herausgeführte Hohlwelle 29, auf der drehfest die Dosierscheiben 56 des Normal- oder Grobdosierrades 57 angeordnet sind. Die Dosierzellen 58 des Normal- und Grobdosierrades 55 sind größer als die Dosierzellen 59 des Normal-und Grobdosierrades 57 ausgebildet.

Auf der Dosierwelle 20 ist die Buchse 32 mit dem Mitnahmeelement 34' mittels des Bolzen 33 drehfest angeordnet. Dieses Mitnahmeelement 34' kann mit dem Mitnahmebolzen 36, der an dem an der Hohlwelle 25 angeordneten Mitnahmeelement 34 verschiebbar geführt ist, mitgenommen werden. In der in Fig. 8 dargestellten Position ist das Grob- und Normaldosierrad 55 drehfest mit der Dosierwelle 25 gekuppelt.

An der Hohlwelle 29 ist das Mitnahmeelement 38 mit dem verschiebbaren Bolzen 37 befestigt, welches mit dem an dem Mitnahmeelement 34, das an der Hohlwelle 25 angeordnet ist über den verschiebbaren Kupplungsbolzen 37 zusammenwirkt. Wenn der Bolzen 37 sich in der mit durchzogenen Linien dargestellten Position befindet, faßt der Bolzen 37 hinter das an dem Dosiergehäuse 18 angeordnete Anschlagelement 39 und setzt das Normal- und Grobdosierrad 57 still. Wird der Bolzen 37 in die mit gestrichelten Linien dargestellten Position 37' verschoben, so wird das Grob- oder Normaldosierrad 57 drehfest mit der Dosierwelle 20 über die Hohlwelle 25 gekuppelt.

Wenn der Kupplungsbolzen 36 aus der mit durchzogenen Linien dargestellten Position, in der der Kupplungsbolzen 36 eine drehfeste Verbindung zwischen der Dosierwelle 20 und dem Normal- oder Grobdosierrad 55 herstellt, nach links verschoben wird, so wird die Antriebsverbindung gelöst und das Ende 60 des Bolzens faßt hinter den Anschlag 43, der an dem U-förmigen Bügel 61, der an dem Dosiergehäuse 18 befestigt ist und setzt das Normal- oder Grobdosierrad 55 sowie das Normal- oder Grobdosierrad 57 still.

Auf der Dosierwelle 20 ist weiterhin die aus dem Gehäuse 18 herausgeführte Hohlwelle 62 angeordnet, auf der das als Feinstdosierrad ausgebildete Feindosierrad 52 drehfest angeordnet ist. Auf der Hohlwelle 62 ist die weitere aus dem Gehäuse herausgeführte Hohlwelle 63, auf der das Feindosierrad 53 drehfest angeordnet ist. Die Hohlwelle 62 und das Feinstdosierrad 53 werden über dem Kupplungsbolzen 64 und dem Mitnahmeelement 65 mit der Dosierwelle 20 drehfest gekuppelt. Das Feindosierrad 53 wird ebenfalls über einen Kupplungsbolzen 66 mit dem Mitnahmeelement 67 und der Hohlwelle mit der Dosierwelle 20 drehfest verbunden.

Im Betrieb sind entweder nur die Feindosierräder 52 und 53 oder die Grobdosierräder 55 und 57 mit der Dosierwelle 20 verbunden. Entsprechend werden die außerhalb der Dosierräder und des Dosiergehäuses 18 angeordneten Kupplungsbolzen 36, 37, 64 und 66 eingestellt. Dieses bedeutet, daß entgegen der Darstellung in Fig. 8, wenn die Feindosierräder 52 und/oder 53 Feinsaatgut ausbringen sollen, der Kupplungsbolzen 36 nach links verschoben wird, so daß die Antriebsverbindung zwischen der Dosierwelle 20 und dem Normal- oder Grobdosierrad 58 gelöst ist.

Die Schaltbereiche sowie Schaltstellung der Bolzen 36, 37, 64 und 68 sind farblich an den Stellen 71 unterschiedlich gekennzeichnet, so daß leicht festgestellt werden kann, welche Dosierräder mit der Dosierwelle 20 drehfest verbunden sind.

Die Dosierzellen 68 des Feinstdosierrades 52 weisen ein kleineres Dosiervolumen als die Dosierzellen 69 des Feindosierrades 53 auf.

Zwischen dem Grob- oder Normaldosierrad 57 und dem Grobdosierrad ist eine Trennscheibe 70, die auch einstückig mit den äußeren Scheiben der Dosierräder 55 und/oder 57 verbunden sein können, angeordnet. Ebenfalls ist zwischen dem Normal- oder Grobdosierrad 55 und dem Feinstdosierrad 52 sowie dem Feinstdosierrad 52 und dem Feindosierrad 53 ebenfalls Trennscheiben 70 angeordnet.

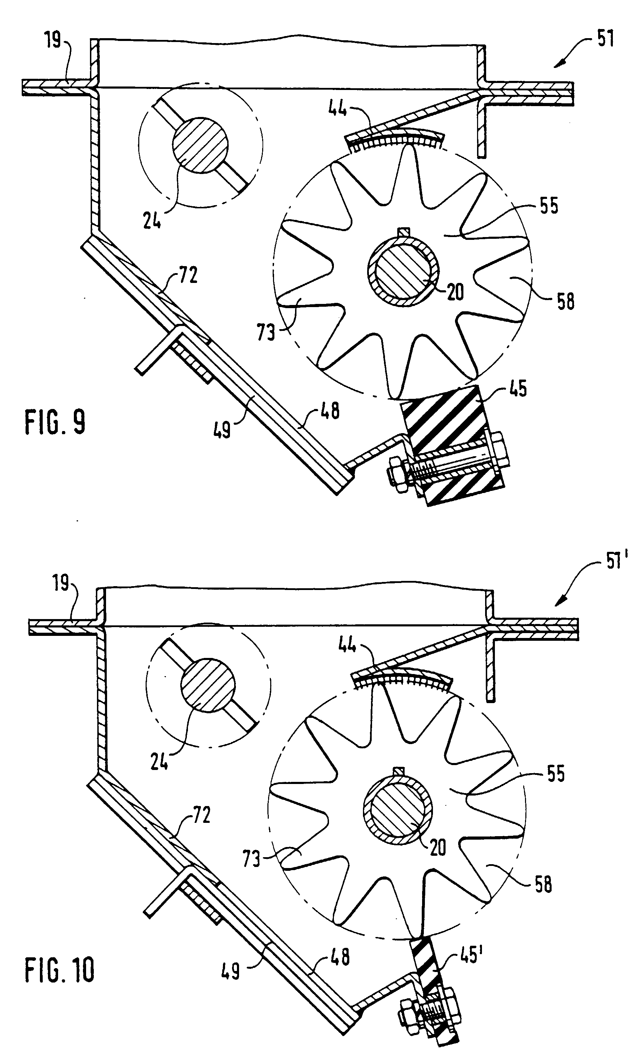

Wie die Fig. 9 zeigt, ist die den Dosierrädern gegenüberliegende untere Wand 72 des Dosiergehäuses 18 schräg ausgebildet. In dem unteren Bereich der Seitenwand 72 des Dosiergehäuses 18 befindet sich die Auslauföffnung 48 zur Restmengenentleerung, die über den Schieber 49 verschlossen ist.

Die Dosiervorrichtung 51' gemäß Fig. 10 unterscheidet sich von der Dosiervorrichtung 51 gemäß Fig. 9 durch die schmalere Ausbildung des Dichtelementes 45'. Das Dichtelement 45' ist aus einem elastischen Gummi- oder Kunststoffmaterial hergestellt. Damit eine sichere Abdichtung durch das Dichtelement 45' gegen den die Dosierzellen trennenden Stege 73 bei den stillgesetzten Dosierrädern gewährleistet ist, damit kein Material unerwünscht in die Förderleitung 6 gelangt, sind die Anschlagelemente 39, 43 derart angeordnet, daß bei den stillgesetzten Dosierrädern in jedem Falle ein Steg 73 des jeweils stillgesetzten Dosierrades direkt auf oder in unmittelbarer Nähe, so daß kein Material durch die Zellen austreten kann, sich befindet. Es können auch mehrere Anschläge oder Ausnehmungen an dem Dosiergehäuse 18 oder dem Bügel 61 angeordnet sein, die das unerwünschte Drehen der abgekuppelten Dosierräder verhindern. Durch Anschlagelemente wird also sichergestellt, daß die abgeschalteten Dosierräder in einer derartigen Position stillgestzt oder fixiert werden, daß ein zwischen den Zellen des Dosierrades sich befindlicher Zellensteg 73 abdichtend mit der Dichtlippe 45' zusammenwirkt. Hierbei überlappt der Zellensteg 73, wie Fig. 10 zeigt, teilweise mit der Dichtlippe 45'. Weiterhin sind die Anschläge derart angeordnet, daß die Zellenstege 73 der abgeschalteten Dosierräder zumindest annähernd fluchtend zueinander festsetzbar sind.

Entsprechend den Ausführungsbeispielen nach den Fig. 9 und 10 ist das Dichtelement 45 bzw. 45' über die ganze Breite der Dosiervorrichtung in gleicher Weise durchgehend ausgebildet.

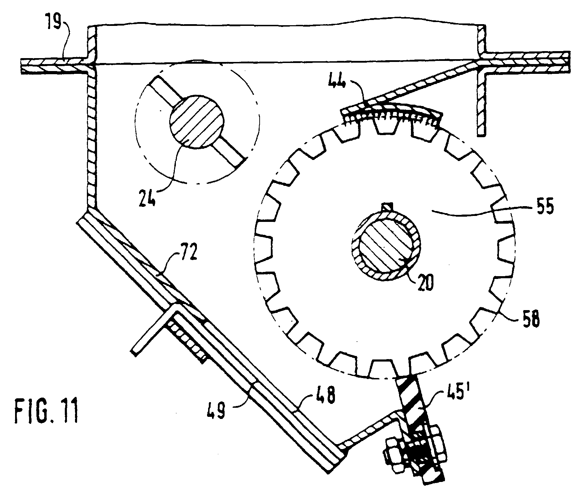

Im Gegensatz hierzu ist nach Fig. 11 vorgesehen, im Bereich der Feindosierräder 52 und 53 das schmale Dichtelement 45' einzusetzen, während im Bereich der Grob- oder Normaldosierräder 55 und 57 das breite Dichtelement 45, in Fig. 9 gezeigt, eingesetzt ist. Diese beiden Dichtelemente 45' und 45 können sowohl einteilig wie auch zweiteilig ausgebildet sein. Die Dichtelemente 45 und 45' werden von den die Dosierzellen trennenden Stegen leicht gerührt, so daß die Dichtelemente etwas bewegt werden.

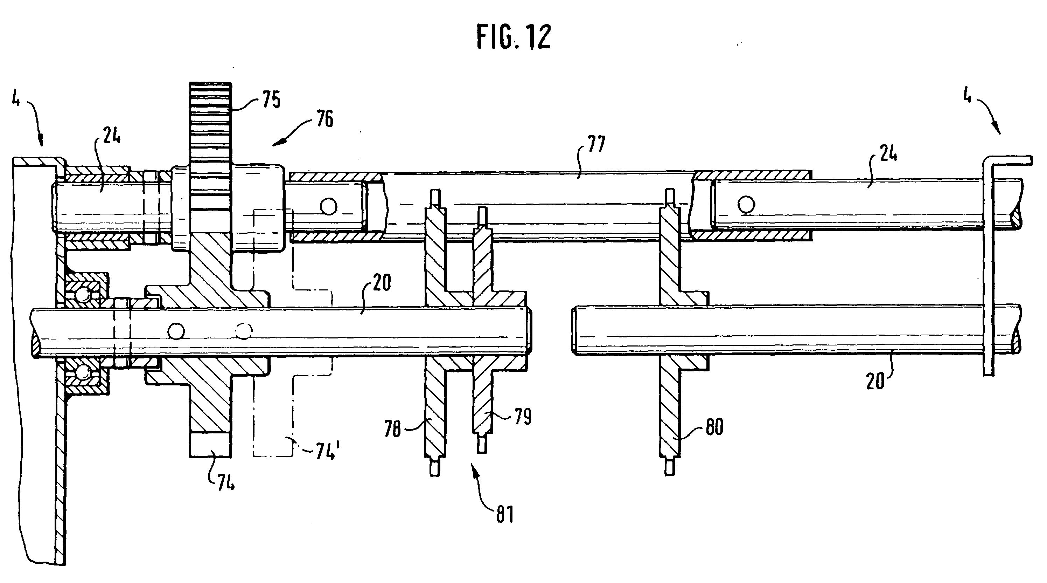

Wie Fig. 12 zeigt, ist auf der Dosierwelle 20 das verschiebbare Zahnrad 74 angeordnet. Dieses Zahnrad 74 steht in der mit durchzogenen Linien dargestellten Position mit dem Zahnrad 75, welches auf der Rührwelle 24 drehfest angeordnet ist, in Antriebsverbindung, so daß über die Dosierwelle 20 und den Stirnradtrieb 76, der von den beiden Zahnrädern 74 und 75 gebildet wird, die Rührwelle 24 der Dosiervorrichtung 4 angetrieben wird. Falls es nicht erwünscht ist, daß die Rührwelle 24 angetrieben wird, läßt sich das Zahnrad 74 in die mit gestrichelten Linien dargestellte Position 74' verschieben und festsetzen, so daß die Antriebsverbindung zwischen den beiden Zahnrädern 74 und 75 bzw. zwischen der Dosierwelle 20 und der Rührwelle 24 unterbrochen ist. Falls, wie in Fig. 11 dargestellt, unter einem Vorratsbehälter zwei Dosiervorrichtungen 4 angeordnet sind, die jeweils eine Rührwelle 24 aufweisen, so werden gemäß dem Ausführungsbeispiel nach Fig. 11 diese beiden Rührwellen 24 über eine Verbindungshohlwelle 77 miteinander drehfest verbunden.

Die Dosierwellen 20 werden über ein nicht dargestelltes Regelgetriebe, welches von einer Kraftquelle angetrieben wird, über die Kettentriebe 78 und 79 bzw. den Kettentrieb 80 angetrieben.

Für die Dosiervorrichtung 4 ist eine Antriebsdrehzahlreduzierung der Dosierräder vorgesehen, so daß bei dem Anlegen der Fahrgassen, wenn einige Saatleitungen, von dem der Dosiervorrichtung 4 zugeordneten Verteilerkopf abgesperrt werden, die ausgebrachte Menge pro Saatgut beim Anlegen der Fahrgassen gleichgehalten wird.

Beim Anlegen der Fahrgassen werden einige der Verteilerleitungen, die von dem Verteilerkopf zu Fahrgassensäscharen führen, mittels einer Absperreinrichtung abgesperrt. Gleichzeitig wird über ein nicht dargestelltes Betätigungselement der Kettentrieb 78 von der Dosierwelle 20 abgekuppelt. Die Dosierwelle 20 wird dann über den Kettentrieb 79 des Übersetzungstriebes 81 angetrieben. Zwischen dem Kettenrad 82 des Übersetzungstriebes 81 und der Dosierwelle 80 ist ein Freilauf angeordnet. Das Übersetzungsverhältnis des Kettentrieb 78 beträgt 1:1, während das Übersetzungsverhältnis des von dem Kettentrieb 79 gebildeten Übersetzungstriebes 81 das Verhältnis Gesamtzahl Säschare pro Dosierorgan zur Gesamtzahl Säschare pro Dosierorgan minus Fahrgassensäschare pro Dosierorgan" aufweist. Das heißt also, daß die Ausbringmenge Saatgut durch das Dosierorgan 4 reduziert wird. Das Betätigungselement ist mit der ebenfalls nicht dargestellten Fahrgassenschaltungseinrichtung gekoppelt, so daß automatisch der Übersetzungstrieb 79 eingeschaltet und der Kettentrieb 78 abgeschaltet wird. Die Dosierwelle des anderen Dosierorganes 4 wird mit unveränderter Drehzahl über den Kettentrieb 80 angetrieben, weil dem dieser Dosiervorrichtung 4 zugeordneten Verteilerkopf keine Fahrgassensäschare zugeordnet sind.

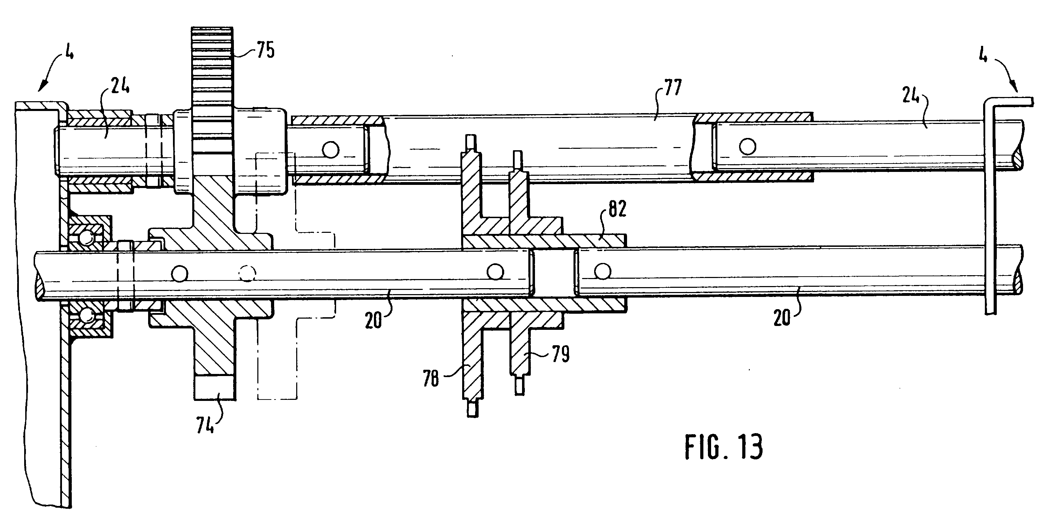

Bei dem Ausführungsbeispiel gemäß Fig. 13 sind die beiden Dosierwellen 20 über die Verbindungsbuchse 82 miteinander verbunden, so daß die Dosierräder der beiden Dosiervorrichtungen 4 mit gleicher Drehzahl angetrieben werden. Auf der Verbindungsbuchse 82 sind die Zahnräder der Kettentriebe 78 und 79 angeordnet. Über diese Kettentriebe kann die Saatgutmenge beim Anlegen der Fahrgassen, die von den Dosiervorrichtungen ausgebracht wird, reduziert werden. Dies geschieht, wie gemäß dem Ausführungsbeispiel nach Fig. 12 beschrieben ist.

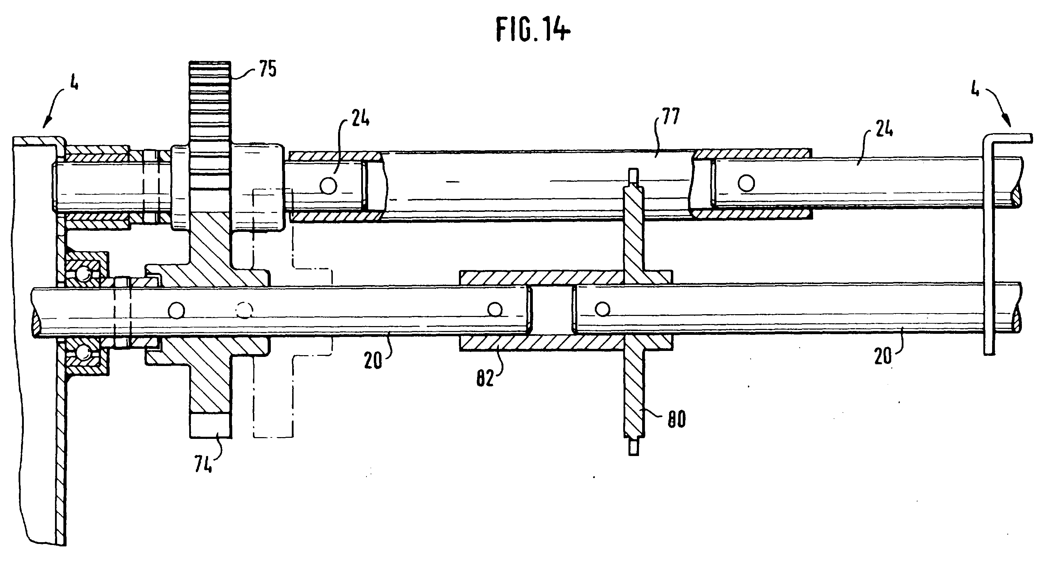

Bei dem Ausführungsbeispiel gemäß Fig. 14 sind die beiden Dosierwellen 20 mit der Verbindungsbuchse 82 miteinander drehfest verbunden. Über den Kettentrieb 80, der drehfest mit der Dosierwelle 20 verbunden ist, werden die Dosierwellen 20 und somit die Dosierräder der Dosiervorrichtungen 4 von einer Kraftquelle angetrieben.

## Patentansprüche

1. Dosiervorrichtung für eine Verteilmaschine, wie Sämaschine oder Düngerstreuer, mit zumindest jeweils einem Grob- oder Normaldosierrad (21, 22, 55, 57) und einem Feindosierrad (23, 52, 53), welche drehbar in einem Gehäuse (18) gelagert und mittels einer Dosierwelle (20) antreibbar sowie mittels Kupplungselementen (36, 37, 41, 64, 66) wahlweise mit der Dosierwelle (20) kuppelbar sind, wobei unterhalb der Dosierräder eine zu einem Verteilerkopf führende, an ein Gebläse angeschlossene Förderleitung angeordnet ist, in welche die Dosierräder das sich im Vorratsbehälter befindliche Material in einstellbaren Mengen einspeisen, dadurch gekennzeichnet, daß die Dosierräder (21, 22, 55, 57, 23, 52, 53) auf auf der Dosierwelle (20) angeordneten Hohlwellen (25, 29, 30, 62, 63), die bis außerhalb des Dosiergehäuses nach außen geführt sind, angeordnet sind, daß voneinander unabhängige Kupplungselemente (36, 37, 41, 64, 66) für die verschiedenen Dosierradtypen außerhalb der Dosierräder (21, 22, 55, 57, 23, 52, 53) und des Gehäuses (18) angeordnet und den bis nach außerhalb des Dosiergehäuses (18) geführten Hohlwellen (25, 29, 30, 62, 63) zugeordnet sind.

2. Dosiervorrichtung nach Anspruch 1, dadurch gekennzeichnet, daß die Hohlwelle(n) (62, 63) für das Feindosierrad (23, 52, 53) oder die Feindosierräder zur entgegengesetzten Seite des Dosiergehäuses (18), wie die Hohlwelle(n) (25, 29, 30) für das (die) Normal- und/oder Grobdosierrad(räder) (21, 22, 55, 57), nach außen geführt sind.

3. Dosiervorrichtung nach Anspruch 1, dadurch gekennzeichnet, daß zumindest auf einer der Hohlwellen (25, 62) zumindest eine weitere zumindest ein Dosierrad antreibende Hohlwelle (29, 63) angeordnet ist, daß den ineinander verschachtelten Hohlwellen (25, 29, 30, 62, 63) jeweils ein Grob- oder Normaldosierrad (21, 22, 55, 57) zugeordnet ist.

4. Dosiervorrichtung nach einem oder mehreren der vorstehenden Ansprüche, dadurch gekennzeichnet, daß mittels dem der auf der Dosierwelle (20) angeordneten Hohlwelle (25, 62) zugeordneten Kupplungselement (36, 41, 64) die Dosierwelle (20) mit der Hohlwelle (25, 62) kuppelbar ist, und daß mittels dem der auf der Hohlwelle (25, 62) angeordneten Hohlwelle (29, 63) zugeordneten Kuppelelement (37, 66) die Hohlwellen, (25, 26, 62, 63) miteinander kuppelbar sind.

5. Dosiervorrichtung nach einem oder mehreren der vorstehenden Ansprüche, dadurch gekennzeichnet, daß jeweils zumindest ein Dosierrad (21, 22, 55, 57, 23, 52, 53) mit einer Hohlwelle (25, 29, 30, 62, 63) drehfest verbunden ist, daß die Hohlwellen (25, 29, 30, 62, 63) jeweils mittels zumindest eines Kupplungselementes (36, 37, 41, 64, 66) mit der Dosierwelle (20) kuppelbar sind.

6. Dosiervorrichtung nach einem oder mehreren der vorstehenden Ansprüche, dadurch gekennzeichnet, daß die Kupplungselemente (36, 37, 41, 64, 66) jeweils derart ausgelegt sind, daß in der einen Stellung das Kupplungselement (36, 37, 41, 64, 66) das Dosierrad (21, 22, 55, 57, 23, 52, 53) mit der Dosierwelle (20) kuppelt und in der anderen Stellung das Kupplungselement (36, 37, 41, 64, 66 das Dosierrad gegenüber dem Gehäuse (18) im entkuppelten Zustand stillsetzt.

7. Dosiervorrichtung nach einem oder mehreren der vorstehenden Ansprüche, dadurch gekennzeichnet, daß das Kupplungselement (36, 37, 41, 64, 66) als in zumindest zwei Positionen verschiebbarer Bolzen ausgebildet ist.

8. Dosiervorrichtung nach einem oder mehreren der vorstehenden Ansprüche, dadurch gekennzeichnet, daß jedes Dosierrad (21, 22, 23, 55, 57, 53) aus zumindest zwei aneinander anliegenden Dosierscheiben (27, 31, 54, 56) besteht, die drehfest miteinander zu einem Dosierrad (21, 22, 23, 55, 57) verbunden sind.

9. Dosiervorrichtung nach einem oder mehreren der vorstehenden Ansprüche, dadurch gekennzeichnet, daß die Dosierscheiben (27, 31, 54, 56) Zellen aufweisen, daß die Zellen eines Dosierrades um das Maß, welches aus dem Produkt Zellenbogenlänge geteilt durch Anzahl der Dosierscheiben gebildet wird, versetzt sind.

10. Dosiervorrichtung nach einem oder mehreren der vorstehenden Ansprüche, dadurch gekennzeichnet, daß zumindest ein Feindosierrad (23, 52, 53) und zumindest zwei Grob- oder Normaldosierräder (21, 23, 55, 57) vorgesehen sind.

11. Dosiervorrichtung nach einem oder mehreren der vorstehenden Ansprüche, dadurch gekennzeichnet, daß zwei Feindosierräder (52, 53) vorgesehen sind, daß die Zellen der beiden Feindosierräder (52, 53) zueinander versetzt angeordnet sind.

12. Dosiervorrichtung nach einem oder mehreren der vorstehenden Ansprüche, dadurch gekennzeichnet, daß jedes Feindosierrad (23) zueinander versetzte oder schräg zur Achse verlaufende Zellen aufweist.

13. Dosiervorrichtung nach einem oder mehreren der vorstehenden Ansprüche, dadurch gekennzeichnet, daß das eine der Feindosierräder als Feinstdosierrad ausgebildet ist.

14. Dosiervorrichtung nach einem oder mehreren der vorstehenden Ansprüche, dadurch gekennzeichnet, daß das eine der beiden Feindosierräder (53) ein größeres Dosiervolumen als das andere Feindosierrad (52) aufweist.

15. Dosiervorrichtung nach einem oder mehreren der vorstehenden Ansprüche, dadurch gekennzeichnet, daß zwei Grob- oder Normaldosierräder (21, 22, 55, 57) vorgesehen sind, daß die Zellen der beiden Grob- oder Normaldosierräder (21, 22, 55, 57) zueinander versetzt angeordnet sind.

16. Dosiervorrichtung nach einem oder mehreren der vorstehenden Ansprüche, dadurch gekennzeichnet, daß jedes Grob- oder Normaldosierrad zueinander versetzt oder schräg zur Achse verlaufende Zellen aufweist.

17. Dosiervorrichtung nach einem oder mehreren der vorstehenden Ansprüche, dadurch gekennzeichnet, daß das eine (55) der beiden Grob- oder Normaldosierräder (55, 57) ein größeres Dosiervolumen als das andere Grob- oder Normaldosierrad (57) aufweist.

18. Dosiervorrichtung nach einem oder mehreren der vorstehenden Ansprüche, dadurch gekennzeichnet, daß das innen liegende Feindosierrad (52) ein kleineres Fördervolumen als das äußere Feindosierrad (53) aufweist.

19. Dosiervorrichtung nach einem oder mehreren der vorstehenden Ansprüche, dadurch gekennzeichnet, daß das innen liegende Grob- oder Normaldosierrad (21) größere und/oder tiefere Dosierzellen als das außen liegende Grob- oder Normaldosierrad (22) aufweist.

20. Dosiervorrichtung nach einem oder mehreren der vorstehenden Ansprüche, dadurch gekennzeichnet, daß die beiden Grob- oder Normaldosierräder (21, 22, 55, 57) unabhängig voneinander schaltbar und/oder mit der Antriebswelle (20) kuppelbar sind.

21. Dosiervorrichtung nach Anspruch 1, dadurch gekennzeichnet, daß die Dosiervorrichtung zumindest zwei Grob- oder Normaldosierräder (21, 22, 55, 57) aufweist, daß die Kupplungselemente (36, 37, 41, 64, 66) für die Grob- oder Normaldosierräder (21, 22, 55, 57) derart ausgebildet sind, daß wahlweise nur ein oder beide Grob- oder Normaldosierräder (21, 22, 55, 57) mit der Dosierwelle (20) kuppelbar sind.

22. Dosiervorrichtung nach einem oder mehreren der vorstehenden Ansprüche, dadurch gekennzeichnet, daß zwei Grob- oder Normaldosierräder (21, 22, 55, 57) vorgesehen sind und zwar derart, daß wahlweise ein oder beide Grob- oder Normaldosierräder (21, 22, 55, 57) mit der Dosierwelle (20) kuppelbar sind.

23. Dosiervorrichtung nach einem oder mehreren der vorstehenden Ansprüche, dadurch gekennzeichnet, daß die beiden Grob- oder Normaldosierräder (21, 22, 55, 57) und/oder die beiden Feindosierräder (23, 52, 53) wahlweise ein- und ausschaltbar sind.

24. Dosiervorrichtung nach einem oder mehreren der vorstehenden Ansprüche, dadurch gekennzeichnet, daß die einzelnen Dosierräder (21, 22, 23, 55, 57, 52, 53) leicht gegen eine andere Form oder ein anderes Fördervolumen aufweisende Dosierräder austauschbar sind.

25. Dosiervorrichtung nach einem oder mehreren der vorstehenden Ansprüche, dadurch gekennzeichnet, daß zumindest eine der Seitenwände des Dosiergehäuses mit dem Kupplungselement abnehmbar an dem Dosiergehäuse (18) angeordnet ist.

26. Dosiervorrichtung nach einem oder mehreren der vorstehenden Ansprüche, dadurch gekennzeichnet, daß die Dosiervorrichtung eine Rührwelle (24) oberhalb der Dosierräder aufweist, daß die Rührwelle (24) über einen Stirnradtrieb (76) von der Dosierwelle (20) antreibbar ist.

27. Dosiervorrichtung nach einem oder mehreren der vorstehenden Ansprüche, dadurch gekennzeichnet, daß in dem Stirnradtrieb (76) eine Kupplung eingebaut ist.

28. Dosiervorrichtung nach einem oder mehreren der vorstehenden Ansprüche, dadurch gekennzeichnet, daß eines der Stirnräder (75) der Stirnradtriebes (76) verschiebbar angeordnet ist.

29. Dosiervorrichtung nach Anspruch 1, wobei die Dosierräder an ihrer Außenfläche jeweils sich axial erstreckende Zellen aufweisen und im unteren Bereich der Dosierräder zumindest ein das Gehäuse gegen die Dosierräder abdichtendes Dichtelement angeordnet ist, dadurch gekennzeichnet, daß das Dichtelement (45) in Förderrichtung (46) gesehen eine Länge aufweist, die zumindest dem Bogenmaß der jeweiligen Zelle an deren äußeren Rand entspricht.

30. Dosiervorrichtung nach Anspruch 1, wobei die Dosierräder in ihrer Außenfläche jeweils sich axial erstreckende Zellen aufweisen und im unteren Bereich der Dosierräder zumindest ein das Gehäuse gegen die Dosierräder abdichtendes Dichtelement angeordnet ist, dadurch gekennzeichnet, daß Vorrichtungselemente (39, 43) vorhanden sind, die beim Abschalten des entsprechenden Dosierrades (21, 22, 55, 57) das abgeschaltete Dosierrad (21, 22, 55, 57) in einer derartigen Position stillsetzen und/oder fixieren, daß ein zwischen den Zellen des Dosierrades (21, 22, 55, 57) sich befindlicher Zellensteg (73) abdichtend mit der Dichtlippe (45') zusammenwirkt.

31. Dosiervorrichtung nach einem oder mehreren der vorstehenden Ansprüche, dadurch gekennzeichnet, daß der Zellensteg (73) zumindest teilweise mit der Dichtlippe (45') überlappt.

32. Dosiervorrichtung nach einem oder mehreren der vorstehenden Ansprüche, dadurch gekennzeichnet, daß das Dosierrad (21, 22, 55, 57) in einer derartigen Position festsetzbar ist, daß der Zellensteg (73) zumindest teilweise überdeckend zu der Dichtlippe (45') steht.

33. Dosiervorrichtung nach einem oder mehreren der vorstehenden Ansprüche, dadurch gekennzeichnet, daß die abgeschalteten Grob- oder Normaldosierräder (21, 22, 55, 57) zueinander drehbar sind, so daß die Stege (73) in der abgeschalteten und festgesetzten Position der Dosierräder (21, 22, 55, 57) zumindest annähernd zueinander fluchtend festsetzbar sind.

34. Dosiervorrichtung nach einem oder mehreren der vorstehenden Ansprüche, dadurch gekennzeichnet, daß die Grob- oder Normaldosierräder eine größere Teilung als die Feindosierräder aufweisen, so daß mehr Dosierzellen bei dem Feindosierrad als bei dem Grob- oder Normaldosierrad vorhanden sind.

35. Dosiervorrichtung nach einem oder mehreren der vorstehenden Ansprüche, dadurch gekennzeichnet, daß das Dichtelement im Bereich der Grob- oder Normaldosierräder eine größere Breite als im Bereich der Feindosierräder aufweist.

36. Dosiervorrichtung nach Anspruch 10, dadurch gekennzeichnet, daß das Dichtelement (45) aus Moosgummi oder einem ähnlichen Material hergestellt ist.

37. Dosierrvorrichtung nach einem oder mehreren der vorstehenden Ansprüche, dadurch gekennzeichnet, daß das Dichtelement aus Polyurethan besteht.

38. Dosiervorrichtung nach einem oder mehreren der vorstehenden Ansprüche, dadurch gekennzeichnet, daß das breite mit dem schmaleren Dichtelement nicht miteinander verbunden ist.

39. Dosiervorrichtung nach einem oder mehreren der vorstehenden Ansprüche, dadurch gekennzeichnet, daß unterhalb der Dosierräder an dem Dosiergehäuse (18) eine Entlehrungsklappe oder -schieber (49) zugeordnet ist.

40. Dosiervorrichtung nach einem oder mehreren der vorstehenden Ansprüche, dadurch gekennzeichnet, daß oberhalb der Dosierräder an den Dosiergehäuse ein das Dosiergehäuse gegen die Dosierräder abdichtendes Element (44), beispielsweise ein Borstenelement angeordnet ist.

41. Dosiervorrichtung nach einem oder mehreren der vorstehenden Ansprüche, dadurch gekennzeichnet, daß die Dosierräder (21, 22, 23, 52, 53, 55, 57) über eine Regeleinrichtung mit einstellbaren Drehzahlen antreibbar sind.

42. Dosiervorrichtung nach einem oder mehreren der vorstehenden Ansprüche, dadurch gekennzeichnet, daß die Dosierräder (21, 22, 23, 52, 53, 55, 57) das dosierte Material in Förderleitungen (6) dosieren, mittels welcher das Material zu Prallköpfen (7), die das Material auf zu Materialausbringelementen (3) führenden Leitungen (9) aufteilen.

43. Dosiervorrichtung nach einem oder mehreren der vorstehenden Ansprüche, dadurch gekennzeichnet, daß das Material von den Dosierrädern (21, 22, 23, 52, 53, 55, 57) über Injektor- oder Zellenradschleusen in die Förderleitung (6) eingeschleust wird.

44. Dosiervorrichtung nach einem oder mehreren der vorstehenden Ansprüche, dadurch gekennzeichnet, daß bei Maschinen mit kleinen Arbeitsbreiten die Dosiervorrichtung (4) im unteren Bereich eines Vorratsbehälters (1), der einen Auslauftrichter aufweist, angeordnet ist, und daß bei größeren Arbeitsbreiten der Vorratsbehälter (10, 13) zumindest zwei Auslauftrichter (12, 14) mit zwei Dosiervorrichtungen (4, 51) aufweist.

45. Dosiervorrichtung nach einem oder mehreren der vorstehenden Ansprüche, dadurch gekennzeichnet, daß an der Dosiervorrichtung (4, 51) eine Fernbedienungsvorrichtung angeordnet, mittels welcher die Ausbringmenge einstellbar und/oder veränderbar ist.

46. Dosiervorrichtung nach einem oder mehreren der vorstehenden Ansprüche, dadurch gekennzeichnet, daß bei einer Sämaschine, die eine Fahrgassenschaltung aufweist, die Dosiervorrichtung (4) derart verstellt wird, daß bei dem Anlegen der Fahrgasse die Saatgutmenge um die an sich den Fahrgassensäscharen zugeführte Saatgutmenge reduziert wird.

47. Dosiervorrichtung nach einem oder mehreren der vorstehenden Ansprüche, dadurch gekennzeichnet, daß die Dosiervorrichtung (4) über eine Fernbedienungseinrichtung derart verstellbar ist, daß zur Anpassung der Aussaatmenge an die an dem Standort erforderliche Menge angepaßt ausbringbar ist.

48. Dosiervorrichtung nach einem oder mehreren der vorstehenden Ansprüche, dadurch gekennzeichnet, daß an der Dosiervorrichtung (4) eine elektrische Fernbedienung angeordnet ist.

49. Dosiervorrichtung nach einem oder mehreren der vorstehenden Ansprüche, dadurch gekennzeichnet, daß die Feindosierräder (23, 52, 53) auf der einen Seite und die Grob- oder Normaldosierräder (21, 22, 55, 57) auf der anderen Seite der Dosiervorrichtung (4, 51) angeordnet sind.

50. Dosiervorrichtung nach einem oder mehreren der vorstehenden Ansprüche, dadurch gekennzeichnet, daß zwischen den getrennt zu- und abschaltbaren Dosierrädern (21, 22, 23, 52, 53, 55, 57) jeweils Scheiben (70) oder scheibenartige Elemente angeordnet sind, welche die Zellen der einzelnen Dosierräder voneinander trennen.

## Claims

1. Metering arrangement for a distributor, such as a seed drill or a fertiliser broadcaster, having at least one coarse or normal metering wheel (21, 22, 55, 57) and one fine metering wheel (23, 52, 53) respectively, which are rotatably mounted in a housing (18) and are drivable by means of a metering shaft (20) as well as being selectively connectable to the metering shaft (20) by means of coupling members (36, 37, 41, 64, 66), wherein a feed line, extending to a distributor head and communicating with a fan, is disposed beneath the metering wheels, to which feed line the metering wheels supply the material, which is situated in the hopper, in adjustable quantities, characterised in that the metering wheels (21, 22, 55, 57, 23, 52, 53) are disposed on hollow shafts (25, 29, 30, 62, 63), which are disposed on the metering shaft (20) and extend outwardly to outside the metering housing, and in that coupling members (36,37, 41, 64, 66), which are independent of one another, for the various types of metering wheel are disposed externally of the metering wheels (21, 22, 55, 57, 23, 52, 53) and of the housing (18) and are associated with the hollow shafts (25, 29, 30, 62, 63) which extend beyond the outside of the metering housing (18).

2. Metering arrangement according to claim 1, characterised in that the hollow shaft(s) (62, 63) for the fine metering wheel (23, 52, 53) or the fine metering wheels extends (extend) outwardly to the opposite side of the metering housing (18), like the hollow shaft(s) (25, 29, 30) for the normal and/or coarse metering wheel(s) (21, 22, 55, 57).

3. Metering arrangement according to claim 1, characterised in that at least on one of the hollow shafts (25, 62) there is disposed at least one additional hollow shaft (29, 63), which drives at least one metering wheel, and in that one coarse or normal metering wheel (21, 22, 55, 57) is respectively associated with each of the hollow shafts (25, 29, 30, 62, 63), which are inserted into one another.

4. Metering arrangement according to one or more of the preceding claims, characterised in that the metering shaft (20) is connectable to the hollow shaft (25, 62) by means of the coupling member (36, 41, 64) associated with the hollow shaft (25, 62) disposed on the metering shaft (20), and in that the hollow shafts (25, 26, 62, 63) are interconnectable by means of the coupling member (37, 66) associated with the hollow shaft (29, 63) disposed on the hollow shaft (25, 62).

5. Metering arrangement according to one or more of the preceding claims, characterised in that at least one metering wheel (21, 22, 55, 57, 23, 52, 53) is respectively connected non-rotatably to a hollow shaft (25, 29, 30, 62, 63), and in that the hollow shafts (25, 29, 30, 62, 63) are respectively connectable to the metering shaft (20) by means of at least one coupling member (36, 37, 41, 64, 66).

6. Metering arrangement according to one or more of the preceding claims, characterised in that the coupling members (36, 37, 41, 64, 66) are respectively arranged in such a manner that the coupling member (36, 37, 41, 64, 66) connects the metering wheel (21, 22, 55, 57, 23, 52, 53) to the metering shaft (20) in one position and, in the other position, the coupling member (36, 37, 41, 64, 66) stops the metering wheel in the uncoupled state relative to the housing (18).

7. Metering arrangement according to one or more of the preceding claims, characterised in that the coupling member (36, 37, 41, 64, 66) is configured as a pin which is displaceable into at least two positions..

8. Metering arrangement according to one or more of the preceding claims, characterised in that each metering wheel (21, 22, 23, 55, 57, 53) comprises at least two metering discs (27, 31, 54, 56), which abut against each other and are non-rotatably interconnected to form a metering wheel (21, 22, 23, 55, 57).

9. Metering arrangement according to one or more of the preceding claims, characterised in that the metering discs (27, 31, 54, 56) have cells, and in that the cells of a metering wheel are offset by the dimension which is formed from the product of the cell arc length divided by the number of metering discs.

10. Metering arrangement according to one or more of the preceding claims, characterised in that at least one fine metering wheel (23, 52, 53) and at least two coarse or normal metering wheels (21, 23, 55, 57) are provided.

11. Metering arrangement according to one or more of the preceding claims, characterised in that two fine metering wheels (52, 53) are provided, and in that the cells of the two fine metering wheels (52, 53) are disposed so as to be offset from one another.

12. Metering arrangement according to one or more of the preceding claims, characterised in that each fine metering wheel (23) has cells which are offset from one another or extend inclinedly relative to the axle.

13. Metering arrangement according to one or more of the preceding claims, characterised in that one of the fine metering wheels (53) is configured as the finest metering wheel.

14. Metering arrangement according to one or more of the preceding claims, characterised in that one of the two fine metering wheels (53) has a greater metering volume than the other fine metering wheel (52).

15. Metering arrangement according to one or more of the preceding claims, characterised in that two coarse or normal metering wheels (21, 22, 55, 57) are provided, and in that the cells of the two coarse or normal metering wheels (21, 22, 55, 57) are disposed so as to be offset from one another.

16. Metering arrangement according to one or more of the preceding claims, characterised in that each coarse or normal metering wheel has cells which extend in an offset manner from one another or inclinedly relative to the axle.

17. Metering arrangement according to one or more of the preceding claims, characterised in that one (55) of the two coarse or normal metering wheels (55, 57) has a greater metering volume than the other coarse or normal metering wheel (57).

18. Metering arrangement according to one or more of the preceding claims, characterised in that the internally situated fine metering wheel (52) has a smaller feed volume than the outer fine metering wheel (53).

19. Metering arrangement according to one or more of the preceding claims, characterised in that the internally situated coarse or normal metering wheel (21) has larger and/or deeper metering cells than the externally situated coarse or normal metering wheel (22).

20. Metering arrangement according to one or more of the preceding claims, characterised in that the two coarse or normal metering wheels (21, 22, 55, 57) are switchable independently of each other and/or are connectable to the drive shaft (20).

21. Metering arrangement according to claim 1, characterised in that the metering arrangement has at least two coarse or normal metering wheels (21, 22, 55, 57), in that the coupling members (36, 37, 41, 64, 66) for the coarse or normal metering wheels (21, 22, 55, 57) are configured in such a manner that only one or both coarse or normal metering wheels (21, 22, 55, 57) are selectively connectable to the metering shaft (20).

22. Metering arrangement according to one or more of the preceding claims, characterised in that two coarse or normal metering wheels (21, 22, 55, 57) are provided and in such a manner, in fact, that one or both coarse or normal metering wheels (21, 22, 55, 57) are selectively connectable to the metering shaft (20).

23. Metering arrangement according to one or more of the preceding claims, characterised in that the two coarse or normal metering wheels (21, 22, 55, 57) and/or the two fine metering wheels (23, 52, 53) can be switched-on or -off selectively.

24. Metering arrangement according to one or more of the preceding claims, characterised in that the individual metering wheels (21, 22, 23, 55, 57, 52, 53) are easily exchangeable for metering wheels having a different configuration or a different feed volume.

25. Metering arrangement according to one or more of the preceding claims, characterised in that at least one of the lateral walls of the metering housing is disposed on the metering housing (18) so as to be removable with the coupling member.

26. Metering arrangement according to one or more of the preceding claims, characterised in that the metering arrangement has an agitator shaft (24) above the metering wheels, and in that the agitator shaft (24) is drivable by the metering shaft (20) via spur wheel drive (76).

27. Metering arrangement according to one or more of the preceding claims, characterised in that a coupling is incorporated in the spur wheel drive (76).

28. Metering arrangement according to one or more of the preceding claims, characterised in that one of the spur wheels (75) of the spur wheel drive (76) is displaceably disposed.

29. Metering arrangement according to claim 1, wherein the metering wheels each have axially extending cells on their external faces, and at least one sealing member, which seals the housing from the metering wheels, is disposed in the lower region of the metering wheels characterised in that the sealing member (45), when viewed with respect to the direction of the feed (46), has a length which corresponds at least to the arc dimension of the respective cell on its outer edge.

30. Metering arrangement according to claim 1, wherein the metering wheels each have axially extending cells on their external faces, and at least one sealing member, which seals the housing from the metering wheels, is disposed in the lower region of the metering wheels, characterised in that fixtures (39, 43) are provided which, when the appropriate metering wheel (21, 22, 55, 57) is switched-off, stop and/or secure the switched-off metering wheel (21, 22, 55, 57) in such a position that a cell web (73), situated between the cells of the metering wheel (21, 22, 55, 57), co-operates in a sealing manner with the sealing lip (45').

31. Metering arrangement according to one or more of the preceding claims, characterised in that the cell lip (73) overlaps, at least partially, the sealing lip (45').

32. Metering arrangement according to one or more of the preceding claims, characterised in that the metering wheel (21, 22, 55, 57) is securable in such a position that the cell web (73) at least partially covers the sealing lip (45').

33. Metering arrangement according to one or more of the preceding claims, characterised in that the switched-off coarse or normal metering wheels (21, 22, 55, 57) are rotatable relative to one another, so that the webs (73) are securable so as to be at least approximately in alignment with one another in the switched-off and secured position of the metering wheels (21, 22, 55, 57).

34. Metering arrangement according to one or more of the preceding claims, characterised in that the coarse or normal metering wheels have a larger spacing than the fine metering wheels, so that there are more metering cells in the case of the fine metering wheel than in the case of the coarse or normal metering wheel.

35. Metering arrangement according to one or more of the preceding claims, characterised in that the sealing member has a greater width in the region of the coarse or normal metering wheels than in the region of the fine metering wheels.

36. Metering arrangement according to claim 10, characterised in that the sealing member (45) is produced from foam rubber or a similar material.

37. Metering arrangement according to one or more of the preceding claims, characterised in that the sealing member is formed from polyurethane.

38. Metering arrangement according to one or more of the preceding claims, characterised in that the wide sealing member is not interconnected with the narrower sealing member.

39. Metering arrangement according to one or more of the preceding claims, characterised in that a discharge flap or slide (49) is disposed beneath the metering wheel on the metering housing (18).

40. Metering arrangement according to one or more of the preceding claims, characterised in that a member (44), for example a brush member, which seals the metering housing from the metering wheels, is disposed above the metering wheels on the metering housing.

41. Metering arrangement according to one or more of the preceding claims, characterised in that the metering wheels (21, 22, 23, 52, 53, 55, 57) are drivable at adjustable speeds via a regulating means.

42. Metering arrangement according to one or more of the preceding claims, characterised in that the metering wheels (21, 22, 23, 52, 53, 55, 57) meter the metered material into feed lines (6), by means of which the material is supplied to deflecting heads (7), which split-up the material into lines (9) extending to material distributing members (3).

43. Metering arrangement according to one or more of the preceding claims, characterised in that material from the metering wheels (21, 22, 23, 52, 53, 55, 57) is charged into the feed line (6) via injector or cell wheel charging valves.

44. Metering arrangement according to one or more of the preceding claims, characterised in that, in the case of machines having small working widths, the metering arrangement (4) is disposed in the lower region of the hopper (1), which has a discharge funnel, and in that, in the case of larger working widths, the hopper (10, 13) has at least two discharge funnels (12, 14) with two metering arrangements (4, 51).

45. Metering arrangement according to one or more of the preceding claims, characterised in that a remote control means, by means of which the quantity to be distributed can be adjusted and/or altered, is disposed on the metering arrangement (4, 51).

46. Metering arrangement according to one or more of the preceding claims, characterised in that, in the case of a seed drill which has a feed control for the tram lines, the metering arrangement (4) is adjusted in such a manner that, when the tramline is produced, the seed quantity is reduced by the seed quantity supplied per se to the tramline sowing coulters.

47. Metering arrangement according to one or more of the preceding claims, characterised in that the metering arrangement (4) is adjustable, via a remote control means, in such a manner that the sowing quantity can be adapted to the quantity necessary at the particular location.

48. Metering arrangement according to one or more of the preceding claims, characterised in that an electrical remote control is disposed on the metering arrangement (4).

49. Metering arrangement according to one or more of the preceding claims, characterised in that the fine metering wheels (23, 52, 53) are disposed on one side, and the coarse or normal metering wheels (21, 22, 55, 57) are disposed on the other side, of the metering arrangement (4, 51).

50. Metering arrangement according to one or more of the preceding claims, characterised in that discs (70) or disc-like elements are respectively disposed between the metering wheels (21, 22, 23, 52, 53, 55, 57), which can be separately switched-on and -off, and said disc or elements separate the cells of the individual metering wheels from one another.

## Revendications

1. Dispositif de dosage pour un distributeur tel qu'un semoir ou un épandeur d'engrais comportant au moins chaque fois une roue de dosage grossier ou normal (21, 22, 55, 57) et une roue de dosage fin (23, 52, 53) montées à rotation dans un boîtier (18) et entraînées par un arbre de dosage (20) ainsi que des éléments de couplage (36, 37, 41, 64, 66) qui peuvent être couplés sélectivement à l'arbre de dosage (20), et en dessous des roues de dosage, une conduite de transfert aboutissant à une tête de répartition, cette conduite étant branchée sur une machine soufflante, et les roues de dosage injectant en quantités réglables les produits du réservoir dans la conduite de transfert,
caractérisé en ce que
• les roues de dosage (21, 22, 55, 57, 23, 52, 53) sont montées sur des arbres creux (25, 29, 30, 62, 63) de même montés sur l'arbre de dosage (20), ces arbres creux allant jusqu'à l'extérieur du boîtier de dosage,
• des éléments de couplage indépendants (36, 37, 41, 64, 66) pour les différents types de roues de dosage étant prévus à l'extérieur des roues de dosage (21, 22, 55, 57, 23, 52, 53) et elles sont associées aux arbres creux (25, 29, 30, 62, 63) sortant du boîtier de dosage (18).

2. Dispositif de dosage selon la revendication 1,
caractérisé en ce que
les arbres creux (62, 63) pour la roue de dosage fin (23, 52, 53) ou les roues de dosage fin, comme les arbres creux (25, 29, 30) pour la ou les roues de dosage normal et/ou grossier (21, 22, 55, 57), sortent par des côtés opposés du boîtier de dosage (18).

3. Dispositif de dosage selon la revendication 1 ,
caractérisé en ce qu'
au moins sur l'un des arbres creux (25, 62), il y a au moins un autre arbre creux (29, 63) entraînant au moins une roue de dosage, et aux arbres creux (25, 29, 30, 62, 63) imbriqués, est associée chaque fois une roue de dosage grossier ou normal (21, 22, 55, 57).

4. Dispositif de dosage selon une ou plusieurs des revendications précédentes,
caractérisé en ce que
- par l'élément de couplage (36, 41, 64) associé à l'arbre creux (25, 62) monté sur l'arbre de dosage (20), on peut coupler l'arbre de dosage (20) aux arbres creux (25, 62), et
- par l'élément de couplage (37, 66) associé à l'arbre creux (29, 63) monté sur l'arbre creux (25, 62), on peut coupler entre eux les arbres creux (25, 26, 62, 63).

5. Dispositif de dosage selon une ou plusieurs des revendications précédentes,
caractérisé en ce que
- chaque fois au moins une roue de dosage (21, 22, 55, 57, 23, 52, 53) est reliée solidairement en rotation à un arbre creux (25, 29, 30, 62, 63),
- les arbres creux (25, 29, 30, 62, 63) sont couplés chaque fois à l'aide d'au moins un élément de couplage (36, 37, 41, 64, 66) à l'arbre de dosage (20).

6. Dispositif de dosage selon une ou plusieurs des revendications précédentes,
caractérisé en ce que
les éléments de couplage (36, 37, 41, 64, 66) sont réalisés chaque fois pour que dans une position, l'élément de couplage (36, 37, 41, 64, 66) accouple la roue de dosage (21, 22, 55, 57, 23, 52, 53) à l'arbre de dosage (20) et dans l'autre position, l'élément de couplage (36, 37, 41, 64, 66) met au repos à l'état découplé, la roue de dosage par rapport au boîtier (18).

7. Dispositif de dosage selon une ou plusieurs des revendications précédentes,
caractérisé en ce que
l'élément de couplage (36, 37, 41, 64, 66) est un goujon coulissant dans au moins deux positions.

8. Dispositif de dosage selon une ou plusieurs des revendications précédentes,
caractérisé en ce que
chaque roue de dosage (21, 22, 23, 55, 57, 53) se compose d'au moins deux disques de dosage (27, 31, 54, 56) juxtaposés, qui sont reliés solidairement en rotation pour former une roue de dosage (21, 22, 23, 55, 57).

9. Dispositif de dosage selon une ou plusieurs des revendications précédentes,
caractérisé en ce que
- les disques de dosage (27, 31, 54, 56) comportent des alvéoles,
- les alvéoles d'une roue de dosage sont décalées d'une distance correspondant au produit de la longueur de l'arc d'alvéoles divisée par le nombre de disques de dosage.

10. Dispositif de dosage selon une ou plusieurs des revendications précédentes,
caractérisé par
au moins une roue de dosage fin (23, 52, 53) et au moins deux roues de dosage grossier ou normal (21, 23, 55, 57).

11. Dispositif de dosage selon une ou plusieurs des revendications précédentes,
caractérisé par
deux roues de dosage fin (52, 53) dont les alvéoles sont décalées.

12. Dispositif de dosage selon une ou plusieurs des revendications précédentes,
caractérisé en ce que
chaque roue de dosage fin (23) comporte des alvéoles décalées ou inclinées par rapport à l'axe.

13. Dispositif de dosage selon une ou plusieurs des revendications précédentes,
caractérisé en ce que
l'une des roues de dosage fin est réalisée sous la forme d'une roue de dosage extrêmement fin.

14. Dispositif de dosage selon une ou plusieurs des revendications précédentes,
caractérisé en ce que
l'une des deux roues de dosage fin (53) a un volume de dosage plus grand que l'autre roue de dosage fin (52).

15. Dispositif de dosage selon une ou plusieurs des revendications précédentes,
caractérisé
par deux roues de dosage grossier ou normal (21, 22, 55, 57) dont les alvéoles sont décalées.

16. Dispositif de dosage selon une ou plusieurs des revendications précédentes,
caractérisé en ce que
chaque roue de dosage grossier ou normal comporte des alvéoles décalées ou inclinées par rapport à l'axe.

17. Dispositif de dosage selon une ou plusieurs des revendications précédentes,
caractérisé en ce que
l'une (55) des deux roues de dosage grossier ou normal (55, 57) a un volume de dosage plus grand que l'autre roue de dosage grossier ou normal (57).

18. Dispositif de dosage selon une ou plusieurs des revendications précédentes,
caractérisé en ce que
la roue de dosage fin (52) située à l'intérieur a un débit volumique inférieur à celui de la roue de dosage fin extérieure (53).

19. Dispositif de dosage selon une ou plusieurs des revendications précédentes,
caractérisé en ce que
la roue de dosage grossier ou normal (21) située à l'intérieur a des alvéoles de dosage plus grandes et/ou plus profondes que la roue de dosage grossier ou normal (22) située à l'extérieur.

20. Dispositif de dosage selon une ou plusieurs des revendications précédentes,
caractérisé en ce que
les deux roues de dosage grossier ou normal (21, 22, 55, 57) peuvent être commutées indépendamment et/ou être couplées à l'arbre d'entraînement (20).

21. Dispositif de dosage selon la revendication 1,
caractérisé en ce que
le dispositif de dosage comporte au moins deux roues de dosage grossier ou normal (21, 22, 55, 57),
les éléments de couplage (36, 37, 41, 64, 66) pour les roues de dosage grossier ou normal (21, 22, 55, 57) sont réalisés pour qu'au choix seulement l'une ou les deux roues de dosage grossier ou normal (21, 22, 55, 57) sont couplées à l'arbre de dosage (20).

22. Dispositif de dosage selon une ou plusieurs des revendications précédentes,
caractérisé par
deux roues de dosage grossier ou normal (21, 22, 55, 57) et cela pour coupler au choix l'une ou les deux roues de dosage grossier ou normal (21, 22, 55, 57) à l'arbre de dosage (20).

23. Dispositif de dosage selon une ou plusieurs des revendications précédentes,
caractérisé en ce que
les deux roues de dosage grossier ou normal (21, 22, 55, 57) et/ou les deux roues de dosage fin (23, 52, 53) peuvent être embrayées ou débrayées sélectivement.

24. Dispositif de dosage selon une ou plusieurs des revendications précédentes,
caractérisé en ce que
les différentes roues de dosage (21, 22, 23, 55, 57, 52, 53) peuvent être remplacées facilement par des roues de dosage ayant une autre forme ou une autre capacité.

25. Dispositif de dosage selon une ou plusieurs des revendications précédentes,
caractérisé en ce qu'
au moins l'une des parois latérales du boîtier de dosage est monté sur le boîtier de dosage (18) de manière amovible avec l'élément de couplage.

26. Dispositif de dosage selon une ou plusieurs des revendications précédentes,
caractérisé en ce que
le dispositif de dosage comporte un arbre d'agitateur (24) au-dessus des roues de dosage,
cet arbre d'agitateur (24) est entraîné à partir de l'arbre de dosage (20) par un entraînement à pignons droits (76).

27. Dispositif de dosage selon une ou plusieurs des revendications précédentes,
caractérisé
par un embrayage intégré dans l'entraînement à pignons droits (76).

28. Dispositif de dosage selon une ou plusieurs des revendications précédentes,
caractérisé en ce que
l'un des pignons droits (75) de l'entraînement à pignons droits (76) est monté coulissant.

29. Dispositif de dosage selon la revendication 1, les roues de dosage ayant au niveau de leur surface extérieure des alvéoles s'étendant chaque fois axialement et dans la zone inférieure des roues de dosage avec au moins un élément d'étanchéité prévu pour assurer l'étanchéité entre le boîtier et les roues de dosage,
caractérisé en ce que
l'élément d'étanchéité (45) a une longueur prise dans la direction de transfert (46) qui correspond au moins à la longueur de l'arc de l'alvéole respective au niveau de son bord extérieur.

30. Dispositif de dosage selon la revendication 1, dont les roues de dosage ont au niveau de leur surface extérieure des alvéoles s'étendant chaque fois axialement et dans la zone inférieure des roues de dosage au moins un élément d'étanchéité qui assure l'étanchéité entre le boîtier et les roues de dosage,
caractérisé par
des éléments (39, 43) du dispositif qui, à la coupure de la roue de dosage correspondante (21, 22, 55, 57) arrêtent et/ou bloquent la roue de dosage débrayée (21, 22, 55, 57) dans une position telle qu'une nervure d'alvéoles (73) séparant les alvéoles de la roue de dosage (21, 22, 55, 57) coopère de façon étanche avec la lèvre d'étanchéité (45').

31. Dispositif de dosage selon une ou plusieurs des revendications précédentes,
caractérisé en ce que
la nervure d'alvéoles (73) chevauche au moins partiellement la lèvre d'étanchéité (45').

32. °) Dispositif de dosage selon une ou plusieurs des revendications précédentes,
caractérisé en ce que
la roue de dosage (21, 22, 55, 57) se bloque dans une position telle que la nervure d'alvéoles (73) soit au moins en partie en chevauchement avec la lèvre d'étanchéité (45').

33. Dispositif de dosage selon une ou plusieurs des revendications précédentes,
caractérisé en ce que
les roues de dosage grossier ou normal (21, 22, 55, 57), débrayées peuvent tourner les unes par rapport aux autres pour que les nervures (73) des roues de dosage (21, 22, 55, 57) débrayées et bloquées en position, puissent se bloquer au moins pour être sensiblement alignées.

34. Dispositif de dosage selon une ou plusieurs des revendications précédentes,
caractérisé en ce que
les roues de dosage grossier ou normal ont un pas plus grand que les roues de dosage fin, donnant plus d'alvéoles sur la roue de dosage fin que sur la roue de dosage grossier ou normal.

35. Dispositif de dosage selon une ou plusieurs des revendications précédentes,
caractérisé en ce que
l'élément d'étanchéité présente une largeur plus grande dans la zone des roues de dosage grossier ou normal que dans la zone des roues de dosage fin.

36. Dispositif de dosage selon la revendication 10,
caractérisé en ce que
l'élément d'étanchéité (45) est en caoutchouc mousse ou une matière analogue.

37. Dispositif de dosage selon une ou plusieurs des revendications précédentes,
caractérisé en ce que
l'élément d'étanchéité est en polyuréthane.

38. Dispositif de dosage selon une ou plusieurs des revendications précédentes,
caractérisé en ce que
l'élément d'étanchéité large n'est pas relié à l'élément d'étanchéité étroit.

39. Dispositif de dosage selon une ou plusieurs des revendications précédentes,
caractérisé en ce qu'
en dessous des roues de dosage sur le boîtier de dosage (18), il y a un volet ou un tiroir d'évacuation (49).

40. Dispositif de dosage selon une ou plusieurs des revendications précédentes,
caractérisé en ce qu'
au-dessus des roues de dosage, le boîtier de dosage comporte un élément d'étanchéité (44) par exemple en forme de brosse qui assure l'étanchéité entre le boîtier de dosage et les roues de dosage.

41. Dispositif de dosage selon une ou plusieurs des revendications précédentes,
caractérisé en ce que
les roues de dosage (21, 22, 23, 52, 53, 55, 57) sont entraînées selon une vitesse de rotation réglable par l'intermédiaire d'une installation de réglage.

42. Dispositif de dosage selon une ou plusieurs des revendications précédentes,
caractérisé en ce que
les roues de dosage (21, 22, 23, 52, 53, 55, 57) dosent les produits dans les conduites de transfert (6) à l'aide desquelles les produits sont conduits vers des têtes brise jet (7) qui répartissent les produits entre les conduites (9) reliées aux éléments de distribution de produits (3).

43. Dispositif de dosage selon une ou plusieurs des revendications précédentes,
caractérisé en ce que
les produits sont transférés des roues de dosage (21, 22, 23, 53, 55, 57) par des écluses à injecteurs ou à roues alvéolées dans la conduite de transfert (6).

44. Dispositif de dosage selon une ou plusieurs des revendications précédentes,
caractérisé en ce que
pour des machines à largeur de travail faible, le dispositif de dosage (4) est prévu dans la zone inférieure d'un réservoir (1) qui comporte une trémie de sortie et pour des largeurs de travail plus grandes, le réservoir (10, 13) comporte au moins deux trémies de sortie (12, 14) avec deux dispositifs de dosage (4, 51).

45. Dispositif de dosage selon une ou plusieurs des revendications précédentes,
caractérisé
par un dispositif de télécommande équipant le dispositif de dosage (4, 51) permettant de régler et/ou de modifier la quantité distribuée.

46. Dispositif de dosage selon une ou plusieurs des revendications précédentes,
caractérisé en ce que
dans des semoirs à commutation pour les voies de passage, on règle le dispositif de dosage (4) pour qu'en réalisant les voies de passage, on réduise la quantité de semence de la quantité normalement destinée aux socs des semoirs des voies de passage.

47. Dispositif de dosage selon une ou plusieurs des revendications précédentes,
caractérisé en ce que
le dispositif de dosage (4) se règle par l'intermédiaire d'une installation de télécommande pour adapter la quantité de semence à la quantité à distribuer à un endroit donné.

48. Dispositif de dosage selon l'une ou plusieurs des revendications précédentes,
caractérisé
par une télécommande électrique équipant le dispositif de dosage (4).

49. Dispositif de dosage selon une ou plusieurs des revendications précédentes,
caractérisé en ce que
les roues de dosage fin (23, 52, 53) sont prévues d'un côté et les roues de dosage grossier ou normal (21, 22, 55, 57) sont prévues de l'autre côté du dispositif de dosage (4, 51).

50. Dispositif de dosage selon une ou plusieurs des revendications précédentes,
caractérisé en ce qu'
entre les roues de dosage (21, 22, 23, 52, 53, 55, 57) qui peuvent être embrayées et débrayées séparément, il y a chaque fois des disques (70) ou des éléments de forme de disques qui séparent les unes des autres les alvéoles des différentes roues de dosage.
